# EUROPÄISCHE PATENTSCHRIFT

(11) **EP 4 323 720 B1**
(45) Veröffentlichungstag und Bekanntmachung des Hinweises auf die Patenterteilung: **07.08.2024**
(21) Anmeldenummer: 22768696.1
(22) Anmeldetag: 22.08.2022
(51) Int. Cl.: G01B 11/06, G01B 21/08, B26D 1/02, B26D 3/00, B26D 3/28, B26D 5/00, B26D 7/06, B26D 7/26

(54) **VERFAHREN ZUM ERFASSEN EINER DICKE EINER FOLIE ODER PLATTE, SOWIE ANLAGE ZUR HERSTELLUNG EINER SOLCHEN FOLIE ODER PLATTE UND VERFAHREN ZUM BETREIBEN EINER SOLCHEN ANLAGE**
METHOD FOR MEASURING A THICKNESS OF A FILM OR PLATE, SYSTEM FOR MANUFACTURING A FILM OR PLATE OF THIS TYPE, AND METHOD FOR OPERATING A SYSTEM OF THIS TYPE
PROCÉDÉ POUR LA MESURE D'UNE ÉPAISSEUR D'UN FILM OU D'UNE PLAQUE, SYSTÈME POUR LA FABRICATION D'UN FILM OU D'UNE PLAQUE DE CE TYPE, ET PROCÉDÉ POUR LE FONCTIONNEMENT D'UN SYSTÈME DE CE TYPE

(30) Priorität: 26.08.2021 DE 102021122099
(43) Veröffentlichungstag der Anmeldung: 21.02.2024
(73) Patentinhaber: ALBRECHT BÄUMER GmbH & Co. KG, 57258 Freudenberg (DE)
(72) Erfinder: HORSTHEMKE, Jan, 57072 Siegen (DE); MOISEL, Christoph, 51069 Köln (DE); D'COSTA, Inal Rocky, 57072 Siegen (DE)
(74) Vertreter: Patentanwälte Bauer Vorberg Kayser
(86) Internationale Anmeldenummer: PCT/EP2022/073311
(87) Internationale Veröffentlichungsnummer: WO 2023/025717

(56) Entgegenhaltungen:
- DE-A1- 102004 051 235
- DE-U- 6 751 802
- FR-A- 1 193 245
- JP-A- 2007 218 617
- JP-A- H0 976 208
- US-B1- 6 269 724
- FROMENTIN G ET AL: "Development of a precision machine to perform and study orthogonal micro-cutting", PRODUCTION ENGINEERING, CARL HANSER VERLAG, DE, vol. 10, no. 2, 19 January 2016 (2016-01-19), pages 217 - 226, XP035772035, ISSN: 0944-6524, [retrieved on 20160119], DOI: 10.1007/S11740-016-0657-8

## Beschreibung

Die vorliegende Erfindung betrifft ein Verfahren zum Erfassen einer Dicke einer Folie oder Platte. Ferner betrifft die Erfindung eine Anlage zur Herstellung einer Folie oder Platte als ein Herstellungsprodukt aus einem als Ausgangsmaterial vorgesehenen Schaumstoffblock mit den Merkmalen des Oberbegriffs von Anspruch 3. Des Weiteren betrifft die Erfindung ein Verfahren zum Betreiben einer Anlage zur Herstellung einer Folie oder Platte als ein Herstellungsprodukt aus einem als Ausgangsmaterial vorgesehenen Schaumstoffblock.

Aus JP 2007 218617 A ist eine Vorrichtung zur Präparation von dünnen, biologischen Proben bekannt.

Aus JP 09 76208 A ist ein Verfahren zum Schneiden von Holzscheiben bekannt.

Aus FROMENTIN ET AL: "Development of a precision machine to perform and study orthogonal micro-cutting", PRODUCTION ENGINEERING, CARL HANSER VERLAG, DE, Bd.10, Nr. 2, 19. Januar 2016 (2016-01-19), Seiten 217-226, XP035772035, ISSN: 0944-6524, DOI: 10.1007/S11740-016-0657-8 ist eine Vorrichtung zum orthogonalen Mikro-Schneiden bekannt.

Aus US 6 269 724 B1 ist eine Zentralwalze bekannt, an welcher ein Rundblock aufgenommen werden kann, von dem jeweils Streifen abschälbar sind.

Aus DE 67 51 802 U ist eine Schneideinheit bekannt, die in einer Halterung aufgenommen ist.

Aus FR 1 193 245 A ist eine Schälmaschine bekannt, wobei mittels einer Rolle ein Übergang zwischen einem geschälten und einem noch nicht geschälten Bereich erkannt werden soll.

Aus DE 10 2004 051235 A1 ist eine Wicklereinheit bekannt.

Anlagen sowie entsprechende Verfahren zum Betreiben solcher Anlagen, die der Herstellung von Folien oder auch Platten aus einem nicht-metallischen, in der Regel weichen Blockmaterial dienen, sind grundsätzlich aus dem Stand der Technik bekannt. Die vorliegende Erfindung ermöglicht jedoch eine Verbesserung hinsichtlich der Automatisierung der bekannten Anlagen bzw. Verfahren, sowie auch der Qualitätssicherheit der entsprechenden Herstellungsprodukte in Form der Folien bzw. Platten.

So sind grundsätzlich Anlagen bekannt, bei denen eine Folie oder Platte als ein Herstellungsprodukt aus einem als Ausgangsmaterial vorgesehenen Blockmaterial gewonnen wird, wobei sich die vorliegende Erfindung auf die Herstellung aus einem nicht-metallischen Ausgangsmaterial, größtenteils auf Kunststoffbasis, nämlich einem Schaumstoffblock als Ausgangsmaterial, bezieht. Das Ausgangsmaterial ist oftmals porös. Es kann sich bei dem Ausgangsmaterial auch um Komposit-Materialien, wie etwa einem Sandwich-Material, handeln. Das verarbeitete Ausgangsmaterial weist regelmäßig eine Zugfestigkeit bis ungefähr 30 MPa und eine Dichte bis 1400 kg/m³ auf.

Das auf solchen Anlagen verarbeitete Ausgangsmaterial in Form des Blockmaterials weist eine sich in Längenrichtung erstreckende Ausgangsmaterial-Länge, eine sich in Breitenrichtung erstreckende Ausgangsmaterial-Breite und eine sich in Höhenrichtung erstreckende Ausgangsmaterial-Höhe auf. Bei solchen Anlagen ist eine Fördereinheit vorgesehen, die das Ausgangsmaterial im Wesentlichen entlang der Längenrichtung fördern kann. Dabei kann es auch vorkommen oder gar gewünscht sein, dass die Förderrichtung nicht exakt parallel zur Längenrichtung des regelmäßig in Quaderform bereitgestellten Blockmaterials verläuft, sondern das Blockmaterial eine minimale Schrägstellung gegenüber der Förderrichtung aufweist.

Ferner weisen solche Anlagen eine Schneideinheit auf, die dem Herausschneiden des Herstellungsprodukts, also der Folie oder Platte, aus dem Ausgangsmaterial im Wesentlichen entlang der Längenrichtung dient. Dabei weist die Schneideinheit ein den Schnitt dienendes Werkzeug auf, das im Wesentlichen entlang der Breitenrichtung verläuft.

Im Rahmen dieser Anmeldung sollen die angesprochenen drei Richtungen (Längenrichtung, Breitenrichtung, Höhenrichtung) nachfolgend so verstanden werden, dass sie der Orientierung bezüglich der Anlagen dienen. Am Beispiel der Verarbeitung eines quaderförmigen, reversierend vor und zurück verfahrenen Blockmaterials auf einer Anlage, entspricht die Längenrichtung der Förderrichtung, während die Breitenrichtung senkrecht hierzu in einer Horizontalebene und sich entlang des Werkzeugs der Schneideinheit erstreckt. Die Höhenrichtung ist sodann die dritte senkrechte Richtung im Sinne eines kartesischen Koordinatensystems, wobei sich die Höhenrichtung vertikal nach oben erstreckt. Dies gilt auch, wenn das quaderförmige Blockmaterial die angesprochene leichte Schrägstellung aufweist und demnach die Länge des quaderförmigen Blockmaterials nicht exakt entlang der Längenrichtung verläuft und die Breite wiederum nicht exakt in Breitenrichtung. Da es sich lediglich um eine minimale Schrägstellung handelt, die zumeist bewusst vorgenommen und bekannt ist, ist dem Bediener der Anlage sodann auch bewusst, dass die sich in Längenrichtung erstreckende Ausgangsmaterial-Länge nicht exakt gleich der Länge des quaderförmigen Blockmaterials, sowie die sich in Breitenrichtung erstreckende Ausgangsmaterial-Breite nicht exakt gleich der Breite des quaderförmigen Blockmaterials entspricht. Die Längenrichtung kann also grundsätzlich als Förderrichtung verstanden werden, während die Breitenrichtung senkrecht hierzu verläuft.

Dies gilt auch für weitere abweichende Ausführungsformen an Anlagen, wie etwa einem Drehtisch, welcher das Blockmaterials nicht vor und zurück, sondern im Kreis umlaufend fördert. Auch hier kommen regelmäßig quaderförmige Blockmaterialen als Ausgangsmaterial zum Einsatz. Auch bei dieser Anlage entspricht die Längenrichtung der Förderrichtung, wobei jene Längenrichtung sich demnach entlang des Umfangs des Drehtisches erstreckt. Die Breitenrichtung entspricht der Radialrichtung des Drehtischs, während die Höhenrichtung sich erneut senkrecht zu den beiden Richtungen vertikal nach oben erstreckt. Das Werkzeug der Schneideinheit erstreckt sich auch bei einem Drehtisch also entlang der Breitenrichtung. Es kann erneut auch das beispielsweise quaderförmige Blockmaterial mit einer leichten Schrägstellung auf den Tisch gelegt werden, sodass sich die Breite des quaderförmigen Blockmaterials nicht exakt in Breitenrichtung erstreckt.

Auch bei einem dritten Beispiel einer Anlage, nämlich wenn das Ausgangsmaterial als Rundblock auf einer Zentral-Walze gefördert wird, gilt, dass die Längenrichtung grundsätzlich der Förderrichtung der Anlage in Bezug auf das Blockmaterial entspricht. So wird das Blockmaterial, bei dem es sich um einen Rundblock im Sinne eines geometrischen Körpers eines Hohlzylinders handelt, umlaufend auf der Zentral-Walze gefördert. Die Längenrichtung bzw. Förderrichtung verläuft also entlang des Umfangs der Zentral-Walze bzw. entlang des Umfangs des Rundblocks. Demnach entspricht die Ausgangsmaterial-Länge dem Umfang des als Rundblock vorliegenden Blockmaterials. Die Breitenrichtung verläuft wiederum senkrecht hierzu, entlang Mantelfläche des Rundblocks, also entlang der Höhe des Hohlzylinders. Die Höhenrichtung verläuft wiederum senkrecht zu den beiden genannten Richtungen, und zwar entlang der radialen Richtung in Bezug auf die Zentral-Walze bzw. den Rundblock.

Zum bestimmungsgemäßen Schneiden beispielsweise des Schaumstoffblocks wird jenes als Blockmaterial bereitgestellte Ausgangsmaterial an der Schneideinheit vorbeigeführt, wodurch eine in Höhenrichtung gesehen obere Schicht des Schaumstoffblocks als Folie oder Platte abgeschnitten bzw. abgespalten wird. Die Schneideinheit weist dazu konkret beispielsweise einen Messerbalken mit einem umlaufend geführten Messer auf. Dieses kann etwa zwischen einem Doppelkeil geführt bzw. gehalten und abgestützt sein oder aber auch zwischen einem einfachen Keil oberhalb und darunter abgestützt mittels einer Bandage. Bei solchen Keilen, die allgemein auch als Schneidkeil bezeichnet werden können, ist die Keilspitze in Richtung des zur Schneideinheit geförderten Blockmaterials, also entgegen der Förderrichtung bzw. der Längenrichtung ausgerichtet. Das umlaufend geführte Messer wiederum bewegt sich in einer Richtung senkrecht zur Keilspitze, konkret in Breitenrichtung, um den Schnitt selbst durchzuführen.

Alternativ kann die Schneideinheit auch nur ein umlaufendes Messer aufweisen, welches auf seiner gesamten Länge zwischen Bandagen ohne Schneidkeil gehalten und abgestützt ist. Es kann auch mittels einer umlaufenden Säge geschnitten werden, welche Säge ebenfalls umlaufend geführt, jedoch nicht über die gesamte Länge abgestützt ist, oder ein Drahtschneiden durchgeführt werden. Anstelle umlaufend in Breitenrichtung bzw. senkrecht zur Förderrichtung geführter, den Schnitt durchführende Werkzeuge (Messer, Säge, Draht) kann das Werkzeug auch oszillierend in Bewegungen vor und zurück entlang der Breitenrichtung bzw. senkrecht zur Förderrichtung bewegt werden, insbesondere beim Drahtschneiden, um den bestimmungsgemäßen Schnitt auszuführen.

Jedenfalls stellt die durch die Schneideinheit abgetrennte obere Schicht das Herstellungsprodukt in Form der Folie (beispielsweise Schaumstofffolie) bzw. der Platte dar. Das Herstellungsprodukt wird, wenn es sich um eine Folie handelt regelmäßig aus der Anlage abgeführt und etwa zu einem Coil der Schaumstofffolie aufgewickelt. Platten wiederum werden ebenfalls aus der Anlage abgeführt und das geschnittene restliche Blockmaterial kann sodann zum Herausschneiden einer weiteren Platte bzw. weiterer Lagen an Folie erneut als Ausgangsmaterial genutzt werden.

Die Fördereinheiten solcher Anlagen sind also derart eingerichtet, dass, zum Schneiden des Ausgangsmaterials, das Ausgangsmaterial entlang der Längenrichtung an der Schneideinheit vorbei gefördert wird.

Zur Herstellung von Folien bzw. Platten einer vorgegebenen und vor allem einheitlichen Qualität aus einem als Blockmaterial verwendeten Ausgangsmaterial, ist eine laufende Qualitätskontrolle des Prozesses notwendig. So ist beispielsweise eine Dicke der herzustellenden Folie bzw. Platte in Höhenrichtung vorgegeben. Um hintereinander mehrere Lagen Folie bzw. mehrere Platten der gleichen konstanten Dicke aus einem Blockmaterial zu schneiden, ist es notwendig, die vertikale Ausrichtung der Schneideinheit zum Ausgangsmaterial anzupassen, da das Ausgangsmaterial in seiner Ausgangsmaterial-Höhe kontinuierlich mit jeder geschnittenen Lage an Folie bzw. Platte abnimmt. Dabei kann die Erfassung der Dicke der bereits geschnittenen Folie bzw. Platte dazu dienen, eventuelle Fehler in der Ausrichtung der Schneideinheit zum Ausgangsmaterial bereits im Laufe des Verwendens eines Blockmaterials zu korrigieren. Sollte sich etwa die geschnittene Platte oder Folie als zu dick oder zu dünn herausstellen, so könnte dies beispielsweise auf die Ausrichtung bzw. Lage der Schneideinheit in Relation zum Blockmaterial zurückzuführen sein.

Dementsprechend ist es vorteilhaft, wenn die Dicke der Folie oder Platte entlang der Höhenrichtung erfasst wird. Hierzu kann die Anlage eine Messeinrichtung zum Messen auf eine Oberfläche eines Messobjekts aufweisen. Aus dem Stand der Technik ist es diesbezüglich bekannt, unmittelbar auf die geschnittene Folie bzw. Platte abzielende Messverfahren einzusetzen, also etwa direkt eine Messeinrichtung auf die geschnittene Folie bzw. Platte zu richten und somit die Dicke direkt zu messen.

Das unmittelbare Messen einer Folie bzw. Platte als Herstellungsprodukt ist jedoch mit diversen Nachteilen verbunden. So muss das Messverfahren beispielsweise in dem Abfuhrbereich einer Anlage durchgeführt werden oder in einem anschließenden Bereich, wenn die Folie oder Platte bereits aus der Anlage abgeführt wurde. Dies vergrößert den Platzbedarf der gesamten Anlage nachteilig. Ferner handelt es sich bei den geschnittenen Folien bzw. Platten um relative dünne Messobjekte. Dies macht es zur Durchführung einer genauen Messung der Dicke erforderlich, dass jene Folie bzw. Platte als Messobjekt gut gelagert ist und die Position stabil ist, während die Messung stattfindet. Ferner kommt es insbesondere bei aus der Anlage abgeführten Folien zu dem Problem, dass bedingt durch das Abziehen, also den Abtransport, der Folie selbst eine Dickenänderung bzw. Dickenverfälschung stattfindet. So kann eine auf die Folie ausgeübte Zugkraft zu einem Ausdünnen des Materials führen. Wird in einem solchen Bereich bzw. Moment die Dicke der entsprechenden Folie gemessen, führt dies ebenfalls zu verfälschten Ergebnissen. Hinzu kommt der Nachteil, dass, wenn auf einer Anlage verschiedene Folien bzw. Platten unterschiedlicher Dicken herzustellen sind, die entsprechenden auf die Dicken der Folien bzw. Platten optimierten Messeinrichtungen aufwendig angepasst werden bzw. neu kalibriert werden müssen. Dies macht die Anlagen wenig flexibel und den Herstellungsprozess insgesamt langsam, da mehrfach Anpassungen je nach herzustellender Folie bzw. Platte, insbesondere mit Blick auf eine unterschiedlich gewünschte Dicke, notwendig sein können.

Eine Aufgabe der vorliegenden Erfindung ist es, hier Abhilfe zu schaffen und die beschriebenen Nachteile zu vermeiden. Im Einzelnen ist eine Aufgabe der Erfindung, das bekannte Verfahren zum Erfassen einer Dicke einer Folie oder Platte derart weiterzuentwickeln, dass es flexibler und unabhängig sowohl vom Ausgangsmaterial als auch in Bezug auf die gewünschte Foliendicke bzw. Plattendicke ist. Eine weitere Aufgabe ist es, die bekannte Anlage zur Herstellung einer Folie oder Platte flexibler mit Blick auf die Herstellung aus unterschiedlichem Ausgangsmaterial und unterschiedlicher Foliendicken bzw. Plattendicken auszugestalten. Außerdem sollte die Anlage hinsichtlich einer Herstellung qualitativ einheitlich guter Folie bzw. Platten verbessert werden, insbesondere die Herstellung von konstanten Foliendicken bzw. Plattendicken weiter verbessert werden. Ferner ist eine Aufgabe der Erfindung, ein Verfahren zum Betreiben einer Anlage zur Herstellung einer Folie oder Platte bereitzustellen, das die Herstellung von Folien bzw. Platten mit einheitlicher Foliendicke bzw. Plattendicke erleichtert und beschleunigt.

Die Aufgabe wird hinsichtlich des Verfahrens zum Erfassen einer Dicke einer Folie oder Platte durch ein Verfahren mit den Merkmalen des kennzeichnenden Teils von Anspruch 1 gelöst. Bezogen auf die Anlage wird die Aufgabe durch eine Anlage zur Herstellung einer Folie oder Platte als ein Herstellungsprodukt aus einem als Ausgangsmaterial vorgesehenen Schaumstoffblock mit den Merkmalen des kennzeichnenden Teils von Anspruch 3 gelöst. Bezüglich des Verfahrens zum Betreiben einer Anlage wird die Aufgabe durch ein Verfahren zum Betreiben einer Anlage zur Herstellung einer Folie oder Platte als ein Herstellungsprodukt aus einem als Ausgangsmaterial vorgesehenen Schaumstoffblock mit den Merkmalen von Anspruch 11 gelöst. Vorteilhafte Ausführungsformen sind Gegenstand der abhängigen Ansprüche.

Wesentlich für die Erfindung ist die Erkenntnis, dass die beschriebenen Nachteile aus dem Stand der Technik dadurch vermieden werden können, dass die Erfassung der Dicke der geschnittenen Folie bzw. Platte nicht mehr unmittelbar durch direktes Messen erfolgt, sondern vielmehr indirekt. Das zu messende Objekt ist das Ausgangsmaterial und eben nicht mehr das Herstellungsprodukt selbst, wobei das Ausgangsmaterial als Blockmaterial regelmäßig eine Vielfache Ausgangsmaterial-Höhe in Höhenrichtung aufweist als die zu bestimmende Dicke der Folie bzw. Platte. Ferner liegt das Ausgangsmaterial sicher und stabil etwa in dem Bereich vor der Schneideinheit auf einem Tisch der Anlage auf. Dadurch sind die Rahmenbedingungen für das zu messende Objekt bekannt und kann eine stabile prozesssichere Messung mittels Messeinrichtungen der Anlage durchgeführt werden. Eine nachträgliche Verfälschung der Dicke der Folie oder Platte, etwa beim Abführen jenes Herstellungsprodukts aus der Anlage, hat, selbst wenn eine solche Verfälschung stattfindet, keinen negativen Einfluss auf das Bestimmen der Dicke der Folie bzw. Platte. Denn durch das indirekte Messen der Ausgangsmaterial-Höhen bzw. diese repräsentierende Messwerte, kann mittels einer Differenzbildung einfach und dennoch genau auf die geschnittene Dicke des Herstellungsprodukts geschlossen werden.

Bei dem vorschlagsgemäßen Verfahren zum Erfassen einer Dicke zur Lösung der Aufgabe handelt es sich im Einzelnen um ein Verfahren zum Erfassen einer Dicke einer Folie oder Platte, wobei die Folie oder Platte als ein Herstellungsprodukt aus einem als Ausgangsmaterial vorgesehenen Blockmaterial, nämlich aus einem Schaumstoffblock, geschnitten wird, wobei das Ausgangsmaterial eine sich in Längenrichtung erstreckende Ausgangsmaterial-Länge, eine sich in Breitenrichtung erstreckende Ausgangsmaterial-Breite und eine sich in Höhenrichtung erstreckende Ausgangsmaterial-Höhe aufweist. Vorschlagsgemäß wird im Rahmen des Verfahrens, zum Schneiden des Ausgangsmaterials, das Ausgangsmaterial entlang der Längenrichtung zu einer Schneideinheit gefördert. Ferner schneidet die Schneideinheit die Folie oder Platte aus dem Ausgangsmaterial entlang der Längenrichtung heraus. Schließlich wird, zum Erfassen der Dicke der Folie oder Platte, die Dicke entlang der Höhenrichtung erfasst.

Das vorschlagsgemäße Verfahren zum Erfassen einer Dicke ist dadurch gekennzeichnet, dass die Dicke der Folie oder Platte dadurch erfasst wird, dass ein eine vorangehende Ausgangsmaterial-Höhe vor dem Schneiden des Ausgangsmaterials repräsentierender Messwert sowie ein eine nachfolgende Ausgangsmaterial-Höhe nach dem Schneiden des Ausgangsmaterials repräsentierender Messwert gemessen werden und dass mittels einer Auswerteeinheit die Dicke der Folie oder Platte aus der Differenz des die vorangehende Ausgangsmaterial-Höhe repräsentierenden Messwerts minus des die nachfolgende Ausgangsmaterial-Höhe repräsentierenden Messwerts bestimmt wird.

Bei dem vorschlagsgemäßen Anlage zur Herstellung einer Folie oder Platte zur Lösung der Aufgabe handelt es sich im Einzelnen um eine Anlage zur Herstellung einer Folie oder Platte als ein Herstellungsprodukt aus einem als Ausgangsmaterial vorgesehenen Blockmaterial, nämlich aus einem Schaumstoffblock, wobei das Ausgangsmaterial eine sich in Längenrichtung erstreckende Ausgangsmaterial-Länge, eine sich in Breitenrichtung erstreckende Ausgangsmaterial-Breite und eine sich in Höhenrichtung erstreckende Ausgangsmaterial-Höhe aufweist. Die Anlage weist eine Fördereinheit zum Fördern des Ausgangsmaterials entlang der Längenrichtung, sowie eine Schneideinheit zum Herausschneiden der Folie oder Platte aus dem Ausgangsmaterial entlang der Längenrichtung, mit einem Messerbalken mit umlaufend geführten Messer oder oszillierendem Messer, sowie eine Messeinrichtung zum Messen auf eine Oberfläche eines Messobjekts auf. Dabei ist die Fördereinheit derart eingerichtet, dass, zum Schneiden des Ausgangsmaterials, das Ausgangsmaterial entlang der Längenrichtung an der Schneideinheit vorbei gefördert wird.

Die vorschlagsgemäße Anlage zur Herstellung einer Folie bzw. Platte ist dadurch gekennzeichnet, dass die Messeinrichtung derart zum Messen der Ausgangsmaterial-Höhe eingerichtet und angeordnet ist, dass die Messeinrichtung eine vorangehende Ausgangsmaterial-Höhe vor dem Schneiden des Ausgangsmaterials sowie eine nachfolgende Ausgangsmaterial-Höhe nach dem Schneiden des Ausgangsmaterials misst. Die Anlage weist ferner eine Auswerteinheit auf, mittels welcher die Dicke (d) der Folie oder Platte aus der Differenz der vorangehende Ausgangsmaterial-Höhe minus der nachfolgenden Ausgangsmaterial-Höhe (87) bestimmt wird.

Bei dem vorschlagsgemäßen Verfahren zum Betreiben einer Anlage zur Lösung der Aufgabe handelt es sich im Einzelnen um ein Verfahren zum Betreiben einer vorbeschriebenen Anlage zur Herstellung einer Folie oder Platte als ein Herstellungsprodukt aus einem als Ausgangsmaterial vorgesehenen Blockmaterial, nämlich aus einem Schaumstoffblock, bzw. zum Betreiben einer nachfolgend ausgeführten vorteilhaften Ausführungsform einer entsprechenden Anlage zur Herstellung einer Folie oder Platte. Bei dem vorschlagsgemäßen Verfahren zum Betreiben der Anlage wird die Folie oder Platte mittels der Schneideinheit aus dem als Ausgangsmaterial vorgesehenen Blockmaterial, nämlich aus dem Schaumstoffblock, herausgeschnitten. Vorschlagsgemäß wird weiterhin, zur Qualitätskontrolle der geschnittenen Folie oder Platte, ein vorbeschriebenes Verfahren zum Erfassen einer Dicke einer Folie oder Platte durchgeführt, bzw. ein Verfahren zum Erfassen einer Dicke einer Folie oder Platte gemäß einer der nachfolgenden vorteilhaften Ausführungsformen.

Sowohl einzelne technische Merkmale als auch hieraus resultierenden Vorteile, die vorangehend bzw. nachfolgend mit Bezug auf das vorgeschlagene Verfahren zum Erfassen einer Dicke einer Folie oder Platte, sowie bezüglich der vorgeschlagenen Anlage zur Herstellung einer Folie oder Platte, sowie bezüglich des vorgeschlagenen Verfahrens zum Betreiben einer Anlage zur Herstellung einer Folie oder Platte zu finden sind, sind in technisch sinnvoller Weise - auch Kategorie übergreifend - zwischen den unterschiedlichen Ansprüchen und bevorzugten Ausführungsformen übertragbar. Insofern kann regelmäßig auf die Beschreibung der Vorteile der spezifischen Merkmale im Rahmen eine anderen Anspruchskategorie verwiesen werden. Konkret ist die vorschlagsgemäße Anlage vorzugsweise zur Durchführung des vorschlagsgemäßen Verfahrens zum Erfassen einer Dicke einer Folie oder Platte eingerichtet.

Zur angesprochenen Messung der Ausgangsmaterial-Höhen ist bei der vorschlagsgemäßen Anlage wenigstens eine Messeinrichtung vorgesehen. Dabei kann es sich um eine Messeinrichtung handeln, die einen einzigen, beispielsweise laserbasierten Messsensor aufweist, oder aber auch mehrere Messsensoren. Die Messeinrichtung ist derart angeordnet und ausgerichtet, dass eine Messung der Ausgangsmaterial-Höhen erfolgt. Vorzugsweise ist die Messeinrichtung dazu zur Messung auf die Oberfläche des Ausgangsmaterials, also von oben entgegen der Höhenrichtung auf das Blockmaterial, sowohl vor dem Schneiden als auch nach dem Schneiden angeordnet und eingerichtet.

Eine Messeinrichtung realisiert grundsätzlich die Messung an einer Messeinrichtungs-Position. Dabei bezieht sich die Bezeichnung Messeinrichtungs-Position grundsätzlich auf die Anordnung der Messeinrichtung im Raum, also ihre Anordnung in der vorschlagsgemäßen Anlage. Konkret bezieht sich die Messeinrichtungs-Position bevorzugt hauptsächlich auf die Koordinate der Messeinrichtung in Längenrichtung des Blockmaterials bzw. in Förderrichtung in der Anlage. Ein und dieselbe Messeinrichtungs-Position bezogen auf die Längenrichtung meint sodann ein und dieselbe Lage der Messeinrichtung hinsichtlich der Längenrichtung bzw. Förderrichtung. Die Messeinrichtung kann dabei ortsfest angeordnet sein, also eine fixe Position im Rahmen der Anlage einnehmen, sodass keine der Koordinaten der Messeinrichtung variabel ist, oder aber die Messeinrichtung kann auch variabel bezüglich Position oder Ausrichtung verstellbar eingerichtet sein.

Im Gegensatz zur Messeinrichtungs-Position wird die Stelle auf dem Messobjekt, an der die gewünschte Messung mittels der Messeinrichtung stattfindet, allgemein als Messziel-Stelle bezeichnet. Die Messziel-Stelle zeichnet sich dadurch aus, dass auf das Messobjekt bezogen grundsätzlich an einer Stelle des Messobjekts, etwa in Höhenrichtung gesehen oben auf der Oberfläche des Blockmaterials, also an einer einzigen Position mit den drei Raumkoordinaten x bezüglich der Längenrichtung, y bezüglich der Breitenrichtung und z bezüglich der Höhenrichtung, gemessen wird. Ein und dieselbe Messziel-Stelle auf dem Messobjekt, also auf dem Blockmaterial, bezieht sich dabei bei mehreren hintereinander erfolgenden Messungen regelmäßig lediglich auf ein und dieselbe x- und y-Koordinate, also bezogen auf die Breitenrichtung und Längenrichtung grundsätzlich dieselbe Stelle des Messobjekts. Die z-Koordinate wiederum, also die Position in Höhenrichtung gesehen, kann auf dem Messobjekt zwischen mehreren Messung auch an derselben Messziel-Stelle natürlich abweichen, da durch den Schneidvorgang immer eine obere Schicht des Blockmaterials abgeschnitten wird und das Blockmaterial bezüglich seiner Erstreckung in Höhenrichtung von Schnitt zu Schnitt abnimmt.

Von einer Messeinrichtungs-Position aus können unter Umständen also auch durch ein und dieselbe Messeinrichtung verschiedene Messziel-Stellen bezogen auf die Breitenrichtung bzw. bezogen auf die Längenrichtung angesteuert und somit gemessen werden. Ein Beispiel hierfür sind etwa Liniensensoren, die auch zeitgleich mehrere Messziel-Stelle, von einer einzigen Messeinrichtungs-Position abmessen können. Des Weiteren können jedoch auch mehrere Messziel-Stellen durch eine einzige Messeinrichtung an einer einzigen Messeinrichtungs-Position angesteuert werden, da sich das Messobjekt in Form des Blockmaterials relativ zur Messeinrichtung und somit relativ zur Messeinrichtungs-Position bewegt. Sodann können auch zu unterschiedlichen Zeitpunkten an ein und derselben Messeinrichtungs-Position unterschiedliche Messziel-Stellen des Blockmaterials gemessen werden.

Insofern zeichnet sich das vorschlagsgemäße Verfahren zum Erfassen einer Dicke einer Folie oder Platte dadurch aus, dass keine einzige Messziel-Stelle an dem Herstellungsprodukt selbst vorgesehen ist, dessen Dicke zu erfassen ist. Messungen finden nur gezielt auf das Blockmaterial selbst statt, nicht auf die bereits geschnittene Folie oder Platte.

Es ist vorliegend bevorzugt, wenn die beiden Messungen der Ausgangmaterial-Höhen einmal vor und einmal nach dem Schneiden an der gleichen Messziel-Stelle bezüglich des Blockmaterials in Bezug auf seine Koordinaten stattfinden. Dabei handelt es sich nicht um denselben Punkt auf der Oberfläche des Blockmaterials (also nicht um dieselbe z-Koordinate in Höhenrichtung), denn die erste Messung vor dem Schneiden findet an einem ersten Punkt statt, während sodann die geschnittene Folie bzw. Platte abgeführt wird und erst hieran anschließend die zweite Messung nach dem Schneiden an der gleichen Messziel-Stelle stattfindet. Demnach bezieht sich die gleiche Messziel-Stelle grundsätzlich auf die gleichen Koordinaten in Bezug auf das zu schneidende bzw. bereits geschnittene Blockmaterial (regelmäßig gleiche x- sowie y-Koordinate in Längenrichtung und Breitenrichtung).

Vorzugsweise kann auch die Ausgangsmaterial-Höhe sowohl vor dem Schneiden als auch nach dem Schneiden an mehreren Messziel-Stellen in Bezug auf das Ausgangsmaterial stattfinden. So kann beispielsweise vorgesehen sein, dass über mehrere sich entlang der Längenrichtung erstreckende Messziel-Stellen eine Ausgangsmaterial-Höhe gemessen und dann gemittelt wird. Vorzugsweise können auch entlang der Breitenrichtung entsprechende mehrere Messziel-Stellen vorgesehen sein. Dabei ist es möglich, die mehreren Messziel-Stellen durch ein und denselben Messsensor anzusteuern. Beispielsweise kann hierzu ein Liniensensor eingesetzt werden. Ferner ist es aber auch möglich, mehrere Messsensoren vorzusehen, sei es über die Breite entlang der Breitenrichtung oder über die Länge entlang der Längenrichtung verteilt. Ein weiterer Vorteil beim Einsatz mehrerer Sensoren oder zumindest eines Liniensensors mit größerem Messbereich ist, dass beim Einsatz unterschiedlich breiter oder auch unterschiedlich langer Blockmaterialien als Ausgangsmaterial auf ein und derselben Anlage immer noch eine erfolgreiche Messung guter Qualität gewährleistet werden kann. Ebenso kann auch die Ausgangsmaterial-Breite bzw. die Ausgangsmaterial-Länge bestimmt werden, wenn dies gewünscht ist.

Zur Verarbeitung der Messwerte kann eine Auswerteeinheit sowie ferner auch zur Steuerung des Prozesses und der Anlage eine Steuerungseinheit vorgesehen sein. Die Steuerungseinheit kann auch mit der Messeinrichtung bzw. der Auswerteeinheit in Verbindung stehen, um die Messungen zu verwerten.

Im Rahmen der vorschlagsgemäßen Verfahren bzw. durch die vorschlagsgemäße Anlage können zum Messen auch beispielsweise nicht unmittelbar die Höhen, also die vorangehende Ausgangsmaterial-Höhe vor dem Schneiden des Blockmaterials und die nachfolgende Ausgangsmaterial-Höhe nach dem Schneiden, herangezogen werden, sondern etwa diese Höhen repräsentierende Messwerte. So kann zum Beispiel optisch gemessen werden, sodass der Messsignalverlauf repräsentativ für die entsprechende Höhe steht. Ferner kann auf die Oberfläche des Blockmaterials gemessen werden und ein Abstand dieser Oberfläche zum Untergrund, auf dem das Blockmaterial aufliegt, also etwa ein Abstand zwischen Oberfläche des Messobjekts und der Auflagefläche des Messobjekts, bekannt sein, woraus sodann die Höhe des Blockmaterials erfasst werden kann. Die eingesetzten Messsensoren können auch etwa auf die Auflagefläche, also beispielsweise den verfahrbaren Tisch, ursprünglich kalibriert sein. Es können beispielsweise auch bei einem höhenverstellbaren Messsensor die für die gewünschte Messgenauigkeit ausreichend genauen Werte aus der Maschine, welche das vertikale Verfahren jenes Messsensors bewirkt, mit einbezogen bzw. berücksichtigt und genutzt werden.

Grundsätzlich ist vorliegend unter der Bezeichnung Messen ein eigentlicher Messvorgang mittels Messsensors zu verstehen, während unter die Bezeichnung Erfassen auch die Verarbeitung der gemessenen Werte fällt, wie etwa die vorgeschlagene Erfassung der Dicke der hergestellten Folie bzw. Platte über eine Differenzbildung und somit eine Umrechnung der beiden gemessenen Höhen in Form der Ausgangsmaterial-Höhen vor sowie nach dem Schneiden.

Dadurch dass vorschlagsgemäß ein indirektes Messverfahren, was nicht mehr auf das Herstellungsprodukt abzielt, sondern Messungen an dem Ausgangsmaterial zur Erfassung der Dicke des Herstellungsprodukts durchführt, angewendet wird, können verschiedene Nachteile vermieden werden. So kann bei entsprechenden vorschlagsgemäßen Anlagen vorteilhaft auf aufwendige weitere Einrichtungen verzichtet werden, die etwa einer für eine Messung einer dünnen Folie oder Platte eigentlich erforderlichen Materialführung dienen. Solche Materialführungen zur Messung der Herstellungsprodukte, die in der Regel eine wesentlich geringere Dicke aufweisen als die Erstreckung der Ausgangsmaterial-Höhe, sind beim Stand der Technik häufig notwendig, um korrekte Messergebnisse bei einem unmittelbaren Messen jener Folien bzw. Platten zu erzielen. Beispielsweise ist keine Plattenfestlegung bei den vorgeschlagenen Anlagen mehr notwendig. Zwecks prozesssicherer Messung kann auf die sowieso vorzusehende, stabile Führung des Ausgangsmaterials zurückgegriffen werden.

Ferner sind die vorgeschlagenen Anlagen und das vorgeschlagene Verfahren wesentlich flexibler, was die Herstellung völlig unterschiedlicher Folien bzw. Platten auf ein und derselben Anlage betrifft. So sind die direkten Messverfahren des Standes der Technik, die unmittelbar auf das zu messende Herstellungsprodukt abzielen, auch auf das jeweilige Herstellungsprodukt in Form der Folie bzw. Platte, insbesondere hinsichtlich deren zu erwartender Dicke, eingerichtet. Die beispielsweise optischen Messeinrichtungen sind auf die zu erwartende Dicke kalibriert bzw. weisen auch eine spezifische Sensibilität hinsichtlich des Messbereichs abhängig vom Abstand zum Messobjekt, also zur Messziel-Stelle, auf. Hierbei ist der sogenannte Linearitätsfehler von Messsensoren relevant. Ein Messsensor arbeitet grundsätzlich nur jeweils in einem spezifischen Messbereich, konkret in einem gewissen Abstand zum Messobjekt, optimal. Bei einem Wechsel von einer ersten Foliendicke auf eine zweite, beispielsweise größere, Foliendicke ist regelmäßig eine aufwendige Anpassung des Verfahrens und gar der Anlagen notwendig. Da vorschlagsgemäß jedoch nicht mehr das Herstellungsprodukt gemessen wird, sondern vielmehr das Ausgangsmaterial in Form des Blockmaterials, müssen bei einem Wechsel der herzustellenden Folien- bzw. Plattendicken nicht so viele Anpassungen vorgenommen werden. Die Anlagen können insbesondere so eingerichtet sein, dass der Abstand des Messsensors zur Messziel-Stelle nahezu konstant ist, und zwar unabhängig davon, welche Dicke etwa das herzustellende Produkt aufweisen soll. Im Ergebnis ist dadurch der Linearitätsfehler vermeidbar.

Grundsätzlich kann die Dicke der geschnittenen bzw. von dem Blockmaterial abgespaltenen Folie oder Platte als Materialbahn von 0,3 mm bis 700,0 mm reichen. Bevorzugt beträgt die Dicke der geschnittenen Folie bzw. Platte zwischen 1,0 mm und 30,0 mm. Als Materialien für das Blockmaterial wird ein Schaumstoff, insbesondere Weichschaum aus Polyurethan (PUR), verwendet. Alternativ ist es auch möglich, härtere porige/aufgeschäumte Materialien als Blockmaterial zu verwenden und zu Folien oder Platten zu schneiden. So können als Blockmaterial beispielweise auch Polyethylen (PE) oder verschiedene gummiartige, sowie Verbund-, Schicht- oder strukturierte, beispielsweise wabenförmige, Werkstoffe verwendet werden. Grundsätzlich kommen nicht-metallischen Ausgangsmaterialien, größtenteils auf Kunststoffbasis zum Einsatz. Es kann sich bei dem Ausgangsmaterial auch um Komposit-Materialien, wie etwa einem Sandwich-Material, handeln. Das verarbeitete Ausgangsmaterial weist regelmäßig eine Zugfestigkeit bis ungefähr 20 MPa und eine Dichte bis 1400 kg/m³ auf. Bevorzugt kann die Vorschubgeschwindigkeit des Blockmaterials zwischen 1 m/min und 350 m/min, besonders bevorzugt etwa zwischen 4 m/min und 100 m/min, betragen.

Gemäß einer vorteilhaften Ausführungsform ist das Verfahren zum Erfassen einer Dicke einer Folie oder Platte dadurch gekennzeichnet, dass die vorangehende Ausgangsmaterial-Höhe sowie die nachfolgende Ausgangsmaterial-Höhe durch eine, vorzugsweise optische, Messeinrichtung gemessen werden. Dabei weist die Messeinrichtung vorzugsweise einen laserbasierten Messsensor auf. Ferner wird die Messung vorteilhaft bezüglich der Längenrichtung und Breitenrichtung an der gleichen Messziel-Stelle durchgeführt. Die Messung kann dennoch auch durch zwei auf die Längenrichtung bezogen an unterschiedlichen Messeinrichtungs-Positionen angeordneten Messsensoren erfolgen. Jene beiden Messsensoren messen dennoch bezüglich der Längenrichtung und Breitenrichtung auf die gleiche Messziel-Stelle, wenn beispielsweise ein erster Messsensor vor der Schneideinheit auf das Blockmaterial vor dem Schneiden misst und ein zweiter Messsensor hinter der Schneideinheit auf die gleiche Messziel-Stelle des Blockmaterials jedoch nach Abführen der geschnittenen Folie oder Platte misst.

Gemäß einer vorteilhaften Ausführungsform ist die Anlage zur Herstellung einer Folie oder Platte dadurch gekennzeichnet, dass ein Linear-Maschinentisch vorgesehen ist, der die Fördereinheit umfasst und zur Auflage des Ausgangsmaterials eingerichtet ist, und dass die Fördereinheit auflageseits auf dem Linear-Maschinentisch vor entlang der Längenrichtung und zurück entgegen der Längenrichtung reversierend verfahrbar eingerichtet ist. Dabei kann die Auflage des zu schneidenden Blockmaterials auf der Fördereinheit selbst erfolgen und das Blockmaterial bestimmungsgemäß dadurch geschnitten werden, dass die Fördereinheit das Blockmaterial an der Schneideinheit vorbeiführt, wodurch das Blockmaterials an seiner in Höhenrichtung gesehen oberen Oberfläche aufspaltend aufgeschnitten wird. Die Auflagefläche für das Blockmaterial kann durch eine Lochplatte ausgebildet sein und darunter liegend ein Unterdruck bzw. ein Vakuum zum Ansaugen des Blockmaterials auf die Auflagefläche eingerichtet sein.

Gemäß einer alternativen vorteilhaften Ausführungsform ist die Anlage zur Herstellung einer Folie oder Platte dadurch gekennzeichnet, dass ein Drehtisch vorgesehen ist, der die Fördereinheit umfasst und zur Auflage des Ausgangsmaterials eingerichtet ist, wobei die Fördereinheit als umlaufende Auflagefläche des Drehtischs ausgebildet und umlaufend entlang der Längenrichtung verfahrbar eingerichtet ist. Dabei entspricht die Längenrichtung vorzugsweise der entlang des Umfangs des Drehtischs laufenden Richtung. Vorzugsweise ist der Drehtisch auch entgegen der Längenrichtung zurück verfahrbar eingerichtet. Auch die Auflagefläche des Drehtischs kann als Lochplatte ausgebildet sein und an die Unterseite der Lochplatte anschließend ein Unterdruck bzw. Vakuum zum Ansaugen des Blockmaterials eingerichtet sein.

Gemäß einer alternativen vorteilhaften Ausführungsform ist die Anlage zur Herstellung einer Folie oder Platte dadurch gekennzeichnet, dass eine Zentral-Walze zur Aufnahme des als Rundblock ausgebildeten Ausgangsmaterials vorgesehen ist, und dass die Fördereinheit derart durch die Zentral-Walze ausgebildet ist, dass die Zentral-Walze zum Fördern des Ausgangsmaterials in Rotationsrichtung angetrieben werden kann. Dabei kann die Zentral-Walze vorzugsweise selbst als angetriebene Walze ausgebildet sein. Bevorzugt ist jedoch, dass die Zentral-Walze bzw. das auf dieser angeordnete Blockmaterial passiv angetrieben werden, etwa durch das Vorsehen von den Rundblock antreibenden separaten Antriebs-Walzen. Die Längenrichtung verläuft vorzugsweise entlang der Umfangsrichtung der Zentral-Walze.

Gemäß einer weiteren vorteilhaften Ausführungsform ist die Anlage zur Herstellung einer Folie oder Platte dadurch gekennzeichnet, dass die Messeinrichtung auf die Längenrichtung bezogen an nur einer einzigen Messeinrichtungs-Position angeordnet und zum Messen der vorangehenden Ausgangsmaterial-Höhe vor dem Schneiden des Ausgangsmaterials sowie der nachfolgenden Ausgangsmaterial-Höhe nach dem Schneiden des Ausgangsmaterials an dieser einzigen Messposition, insbesondere in einer durch die Breitenrichtung und Höhenrichtung aufgespannten Messebene, eingerichtet ist. Vorteilhaft kann somit eine besonders kompakte Anlage mit wenigen Messeinrichtung realisiert werden. So können sowohl Ausgangswerte beispielsweise des Ausgangsmaterials als auch die Dicke des Herstellungsprodukts in Form der Folie bzw. Platte über das beschriebene indirekte Messverfahren mittels dieser an einer einzigen Messeinrichtungs-Position angeordneten Messeinrichtung realisiert sein. Es kann auf gesondert vorzusehende Messeinrichtungen, wie etwa beim Stand derTechnik zur eigenen Erfassung der Herstellungsprodukt-Dicke verzichtet werden. Gemäß einer weiteren vorteilhaften Ausführungsform ist die Anlage zur Herstellung einer Folie oder Platte dadurch gekennzeichnet, dass die Messeinrichtung auf die Längenrichtung bezogen wenigstens an einer ersten Messeinrichtungs-Position und an einer zweiten Messeinrichtungs-Position angeordnet ist. Vorzugsweise ist die Messeinrichtung zum Messen der vorangehenden Ausgangsmaterial-Höhe vor dem Schneiden des Ausgangsmaterials an der ersten Messeinrichtungs-Position sowie der nachfolgenden Ausgangsmaterial-Höhe nach dem Schneiden des Ausgangsmaterials an der zweiten Messeinrichtungs-Position eingerichtet. Weiter vorzugsweise ist die Messeinrichtung durch einen an der ersten Messeinrichtungs-Position angeordneten ersten Messsensor sowie durch einen an der zweiten Messeinrichtungs-Position angeordneten zweiten Messsensor ausgebildet. Dadurch können vorteilhaft die beiden erforderlichen Messungen zur Bestimmung der Dicke, nämlich die vorangehende Messung des Blockmaterials vor dem Schneiden sowie die nachfolgende Messung der Ausgangsmaterial-Höhe nach dem Schneiden, an zwei unterschiedlichen Messeinrichtungs-Positionen, insbesondere durch zwei unabhängige Messsensoren, durchgeführt werden. So können die beiden Messaufgaben vorteilhaft voneinander getrennt werden. Außerdem kann die Geschwindigkeit der Messung gesteigert werden, da die zweite Messeinrichtungs-Position in Bezug auf die Anlage darauf abgestimmt sein kann, dass das Blockmaterial an einem Ort gemessen wird, der unmittelbar oder zumindest zügig nach Abführen des geschnittenen Herstellungsprodukts vom Blockmaterial folgt.

Gemäß einer weiteren vorteilhaften Ausführungsform ist die Anlage zur Herstellung einer Folie oder Platte dadurch gekennzeichnet, dass die Schneideinheit zum Anpassen ihrer Vertikalposition in Höhenrichtung verstellbar eingerichtet ist. Dabei ist eine automatisierte Verstellung bevorzugt, die optimal auf die erfasste Dicke des Herstellungsprodukts abgestimmt sein kann. Insbesondere kann nach der Erfassung der Dicke die Schneideinheit genau so weit nach unten in Ihrer Vertikalposition verstellt werden, wie gerade erforderlich ist, um eine weitere Lage einer Folie bzw. eine weitere Platte gewünschter Dicke zu schneiden.

Gemäß einer weiteren vorteilhaften Ausführungsform ist die Anlage zur Herstellung einer Folie oder Platte dadurch gekennzeichnet, dass die Schneideinheit in eine Schneideinheit-Halterung integriert ist, wobei die Schneideinheit-Halterung mit einem stationär feststehenden Maschinenständer verbunden ist. Dabei ist die Schneideinheit-Halterung um einen Neigungswinkel, insbesondere von -5° bis 30°, bevorzugt von 0° bis 7°, um die Breitenrichtung drehend entgegen der Längenrichtung und zurück schwenkbar eingerichtet. Durch das Verkippen der Schneideinheit kann das für das Schneiden vorgesehene Werkzeug, wie etwa das umlaufende Messer bzw. ein Schneidkeil, optimal in Bezug auf die zu schneidende Dicke angestellt werden. Auch diese Anstellung kann vorzugsweise in Abhängigkeit davon erfolgen, wie die erfasste Dicke des vorangehenden Schnitts der Folie bzw. Platte ist.

Gemäß einer weiteren vorteilhaften Ausführungsform ist die Anlage zur Herstellung einer Folie oder Platte dadurch gekennzeichnet, dass eine Druckwalze zum Andrücken einer Oberfläche des Ausgangsmaterials entgegen der Höhenrichtung vorgesehen ist, wobei die Druckwalze in Längenrichtung gesehen vor der Schneideinheit angeordnet ist. Die Druckwalze trägt vorteilhaft zu einer einheitlichen Qualität der geschnittenen Folie bzw. Platte bei, indem das zu schneidende Ausgangsmaterial kurz vor der Schnittkante kontinuierlich heruntergedrückt wird und ein Abheben der geschnittenen Folie bzw. Platte verhindert wird. Vorzugsweise ist die Druckwalze in die Schneideinheit-Halterung integriert. Bei einer Höhenverstellung der Schneideinheit-Halterung kann die Druckwalze somit auch automatisch mit verstellt werden.

Gemäß einer weiteren vorteilhaften Ausführungsform ist die Anlage zur Herstellung einer Folie oder Platte dadurch gekennzeichnet, dass die Druckwalze in Höhenrichtung, vorzugsweise getrennt und unabhängig von der Schneideinheit, verstellbar eingerichtet ist. Auf diese Weise kann die Druckwalze auch unabhängig von der Schneideinheit-Halterung verstellt werden, beispielsweise um eine gezielte Anpassung der Druckwalze auch bei größeren gewünschten Folien- bzw. Platten-Dicken vorzunehmen. Alternativ oder zusätzlich kann die Druckwalze auch in einem Winkelversatz zu der Höhenrichtung geneigt, beispielsweise einige Grad um die Breitenrichtung herum entgegen der Längenrichtung gedreht, hoch und herunter verstellbar eingerichtet sein.

Gemäß einer weiteren vorteilhaften Ausführungsform ist die Anlage zur Herstellung einer Folie oder Platte dadurch gekennzeichnet, dass die Messeinrichtung relativ unveränderlich mit der Druckwalze verbunden ist. Dies ist besonders vorteilhaft, da die Druckwalze regelmäßig optimal auf das zu schneidende Blockmaterial ausgerichtet ist. Aufgrund der in Relation unveränderlichen Verbindung mit der Messeinrichtung wird bei einer Anpassung der Lage der Druckwalze somit auch gleichzeitig vorteilhaft die Lage der Messeinrichtung mit angepasst. Da die Druckwalze regelmäßig einen minimalen Abstand zur Oberfläche des zu schneidenden Blockmaterials aufweist, ist somit auch der Abstand der Messeinrichtung zum Blockmaterial, also zum Messobjekt minimal und vor allem konstant. Vorteilhaft lässt sich eine bessere Messwertauflösung erreichen und der Linearitätsfehler vermeiden. Es können Messsensoren verwendet werden, die eine nur sehr geringe Messstrecke abbilden können müssen. Die Messeinrichtung bleibt analog zur Druckwalze gleich zum Ausgangsmaterial, und somit regelmäßig optimal zum Ausgangsmaterial, ausgerichtet.

Gemäß einer weiteren vorteilhaften Ausführungsform ist die Anlage zur Herstellung einer Folie oder Platte dadurch gekennzeichnet, dass die Messeinrichtung relativ unveränderlich mit der Schneideinheit-Halterung verbunden ist. Bei dieser Ausführungsform ist die Messeinrichtung vorteilhaft immer analog zur Schneideinheit-Halterung in Relation zum zu messenden Ausgangsmaterial ausgerichtet. Abstand zum Messobjekt, also zum Blockmaterial, kann somit minimal und konstant gehalten werden, wodurch der Linearitätsfehler vermeidbar ist und eine bessere Messwertauflösung erreicht werden kann.

Gemäß einer weiteren vorteilhaften Ausführungsform ist die Anlage zur Herstellung einer Folie oder Platte dadurch gekennzeichnet, dass die Messeinrichtung selbstständig stationär feststehend angeordnet ist, oder dass die Messeinrichtung relativ unveränderlich mit dem Maschinenständer verbunden ist. Dadurch wird eine von den weiteren regelmäßig verstellbaren Komponenten der Anlage unabhängige Anordnung der Messeinrichtung gewährleistet. Die Messeinrichtung weist sodann regelmäßig vorteilhaft eine konstante Position auf und den eventuellen Erschütterungen der Komponenten der Anlage durch den Herstellungsprozess der Folie oder Platte nicht bzw. in erheblich geringerem Maße ausgesetzt. Eine vorteilhafte Schwingungsentkopplung ist damit erzielbar.

Gemäß einer weiteren vorteilhaften Ausführungsform ist die Anlage zur Herstellung einer Folie oder Platte dadurch gekennzeichnet, dass die Messeinrichtung zum Messen der Ausgangsmaterial-Höhe in Längenrichtung gesehen vor der Schneideinheit eingerichtet und angeordnet ist. Eine Messeinrichtungs-Position vor der Schneideinheit hat den Vorteil, dass die Messeinrichtung unmittelbar in der Nähe des zu messenden Objekts in Form des Ausgangsmaterials angeordnet ist. Eventuell hinter der Schneideinheit angeordnete weitere Einrichtungen zum Abführen des Herstellungsprodukts oder ein Arbeitsbereich zu eben einem händischen Abführen der geschnittenen Platte beispielsweise ist für den bestimmungsgemäßen Messvorgang für die vor der Schneideinheit angeordnete Messeinrichtung unerheblich. Die Messung kann in diesem Einzugsbereich der Anlage demnach besonders ungestört ablaufen. Ferner kann die Messeinrichtung vorteilhaft an hier befindliche Komponenten der Anlage angebunden werden bzw. der freie Raum am Maschinentisch zu einer unabhängigen Montage einer Messeinrichtung ausgenutzt werden.

Gemäß einer vorteilhaften Ausführungsform ist das Verfahren zum Betreiben einer Anlage zur Herstellung einer Folie oder Platte dadurch gekennzeichnet, dass, abhängig von einem Ergebnis des Verfahrens zum Erfassen der Dicke der Folie oder Platte in Bezug auf eine vorangehende Lage, die Schneideinheit bezüglich ihrer Position in Relation zum Ausgangsmaterial, insbesondere in Höhenrichtung, zum Schneiden einer nachfolgenden Lage verstellt wird. Über eine solche Rückkopplung während des Betreibens der Anlage kann eine konstante und hohe Qualität der geschnittenen Folie sowie Platte, insbesondere in Hinsicht auf eine Toleranztreue der gewünschten Herstellungsprodukt-Dicke, gewährleistet werden.

Gemäß einer vorteilhaften Ausführungsform ist das Verfahren zum Betreiben einer Anlage zur Herstellung einer Folie oder Platte dadurch gekennzeichnet, dass mittels der Messeinrichtung die Länge des Ausgangsmaterials in Längenrichtung erfasst wird. Vorteilhaft können somit mehrere Messaufgaben durch eine Messeinrichtung erfüllt werden. Es müssen nicht mehr separate Messeinrichtung vorgesehen werden, um einerseits die Dicke des Herstellungsprodukts und andererseits die Länge des Ausgangsmaterials zu messen, was den anlagentechnischen und auch Bedienungs-Aufwand erheblich reduziert. Grundsätzlich kann durch die Messeinrichtung eine Blocklageerkennung erfolgen. Hierdurch wird vorteilhaft auch der anlagentechnische Aufwand reduziert, denn im Stand der Technik werden für solche Aufgaben häufig Lichtschranken eingesetzt, auf die nun verzichtet werden kann.

Gemäß einer vorteilhaften Ausführungsform ist das Verfahren zum Betreiben einer Anlage zur Herstellung einer Folie oder Platte dadurch gekennzeichnet, dass eine Fördergeschwindigkeit des Ausgangsmaterials abhängig von einer durch die Messeinrichtung erfassten Lage des Ausgangsmaterials angepasst wird. Auf diese Weise kann die Herstellungsgeschwindigkeit erheblich gesteigert werden. Über die vorgesehene Messeinrichtung kann nämlich auch erfasst werden, ob sich das Ausgangsmaterial gerade in einer Position befindet, in der es geschnitten wird, was regelmäßig moderatere Fördergeschwindigkeiten erfordert. Sollte festgestellt werden, dass das Ausgangsmaterial gerade nicht in einer im Eingriff mit der Schneideinheit befindlichen Position angeordnet ist, dann kann die Fördergeschwindigkeit deutlich erhöht werden, um das nunmehr beispielsweise geschnittene restliche Blockmaterial erneut in eine Position für den anschließenden Schnitt zu fördern. Außerdem kann durch diese Blocklageerkennung auch vorteilhaft eine Ein- und Ausschnittregelung stattfinden. So kann der Schnitt regelmäßig durch langsames Einfahren des Blockmaterials gegen das schneidende Werkzeug begonnen werden, während sodann die Fördergeschwindigkeit zum Durchführen des Schnitts erhöht werden kann, sowie final die Fördergeschwindigkeit erneut reduziert werden kann, um ein gemäßigtes Ausfahren des Blockmaterials aus dem Eingriff mit dem schneidenden Werkzeug zu gewährleisten. Auf diese Weise werden vorteilhaft Kräfte-Peaks beim Ein- und Ausfahren in einen Messereingriff reduziert.

Gemäß einer vorteilhaften Ausführungsform ist das Verfahren zum Betreiben einer Anlage zur Herstellung einer Folie oder Platte dadurch gekennzeichnet, dass eine Vertikalposition der Schneideinheit abhängig von einer durch die Messeinrichtung erfassten Lage des Ausgangsmaterials angepasst wird. Dadurch kann die Betriebssicherheit der Anlage erhöht werden, denn die Schneideinheit kann beispielsweise automatisch gezielt hoch gefahren werden, wenn das Ausgangsmaterial unter dieser hindurch zurück entgegen der Längenrichtung in eine Ausgangsposition verfahren wird. So kann eine ungewünschte Kollision zwischen Blockmaterial und Schneideinheit vermieden werden, wobei dies automatisiert ablaufen kann, da über die Messeinrichtung die Lage des Blockmaterials erfasst werden kann. Eine solche Blocklageerkennung führt dazu, dass auf sonst im Stand der Technik häufig vorgesehene Lichtschranken verzichtet und der Aufwand der Anlage hinsichtlich der verwendeten Komponenten reduziert werden kann.

Die Messeinrichtung kann grundsätzlich in ihrem spezifischen Messbereich detektieren, ob sich das Ausgangsmaterial gerade in ihrem Messbereich befindet oder nicht. Daher kann es grundsätzlich zur Erfassung der genauen Lage des Ausgangsmaterials erforderlich sein, dass weitere Werte wie die Fördergeschwindigkeit und/oder die Ausgangsmaterial-Länge bekannt sind, um etwa über eine Auswerteeinheit die aktuelle Lage zu erfassen. Eine solche Auswerteeinheit kann mit einer Steuerungseinheit der Anlage in Verbindung stehen, um die beschriebenen Schritte zum Betreiben der Anlage, beispielsweise ein Anpassen der Vertikalposition der Schneideinheit oder auch der Fördergeschwindigkeit, umzusetzen.

Gemäß einer vorteilhaften Ausführungsform ist das Verfahren zum Betreiben einer Anlage zur Herstellung einer Folie oder Platte dadurch gekennzeichnet, dass die Folie nach dem Schneiden, vorzugsweise kontinuierlich, aus der Anlage abgeführt wird, oder dass die Platte nach dem Schneiden aus der Anlage abtransportiert wird.

Weitere vorteilhafte und bevorzugte Ausgestaltungen ergeben sich aus der nachfolgenden Beschreibung mit Bezug auf die Figuren. In der lediglich Ausführungsbeispiele wiedergebenden Zeichnung zeigt
- Fig. 1: eine Anlage zur Herstellung einer Platte aus einem Blockmaterial in einer schematischen Seitenansicht in einem ersten Zustand kurz vor einem ersten Schnitt einer Platte aus dem Blockmaterial;
- Fig. 2: die Anlage aus Fig. 1 in einem zweiten Zustand während des ersten Schnitts einer Platte aus dem Blockmaterial;
- Fig. 3: die Anlage aus Fig. 1 in einem dritten Zustand kurz nach dem ersten Schnitt einer Platte aus dem Blockmaterial;
- Fig. 4: die Anlage aus Fig. 1 in einem weiteren Zustand nach dem ersten Schnitt einer Platte aus dem Blockmaterial und kurz vor einem weiteren Schnitt einer weiteren Platte aus dem geschnittenen restlichen Blockmaterial;
- Fig. 5: ein Blockmaterial als Ausgangsmaterial in einer schematischen perspektivischen Ansicht;
- Fig. 6: das Blockmaterial aus Fig. 5 nach einem erfolgten Schnitt, aufgetrennt in eine Platte und in das geschnittene restliche Blockmaterial;
- Fig. 7: weitere Ausführungsbeispiele einer Anlage wie aus Fig. 1 in einer schematischen Seitenansicht;
- Fig. 8: ein weiteres Ausführungsbeispiel einer Anlage zur Herstellung einer Platte aus einem Blockmaterial in einer schematischen perspektivischen Ansicht in einem ersten Zustand kurz vor einem ersten Schnitt einer Platte aus dem Blockmaterial;
- Fig. 9: die Anlage aus Fig. 8 in einem weiteren Zustand nach dem ersten Schnitt einer Platte aus dem Blockmaterial mit dem geschnittenen restlichen Blockmaterial; und
- Fig. 10: eine Anlage zur Herstellung einer Folie Platte aus einem Blockmaterial in einer schematischen Seitenansicht.

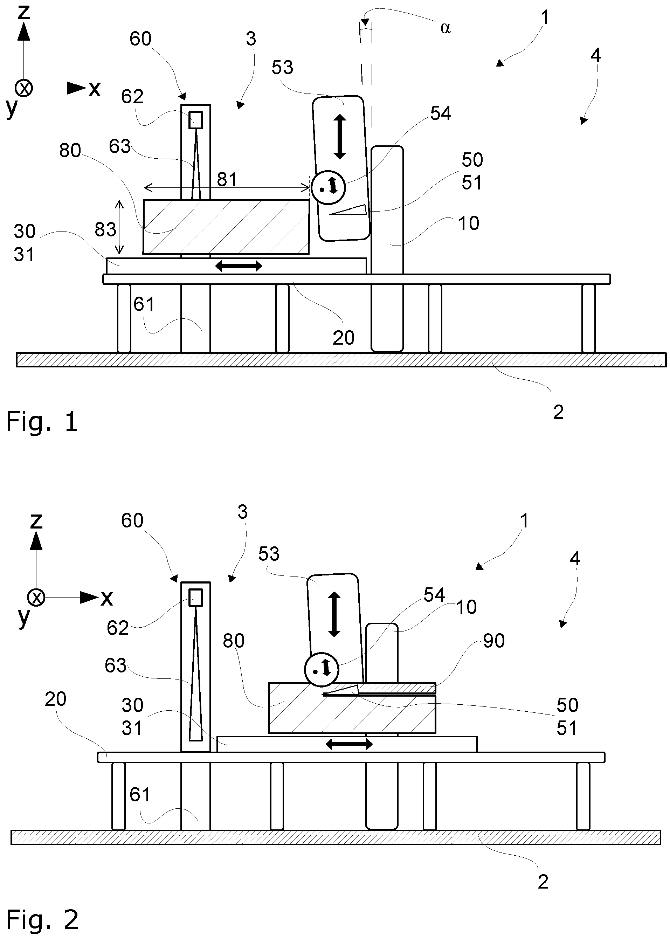

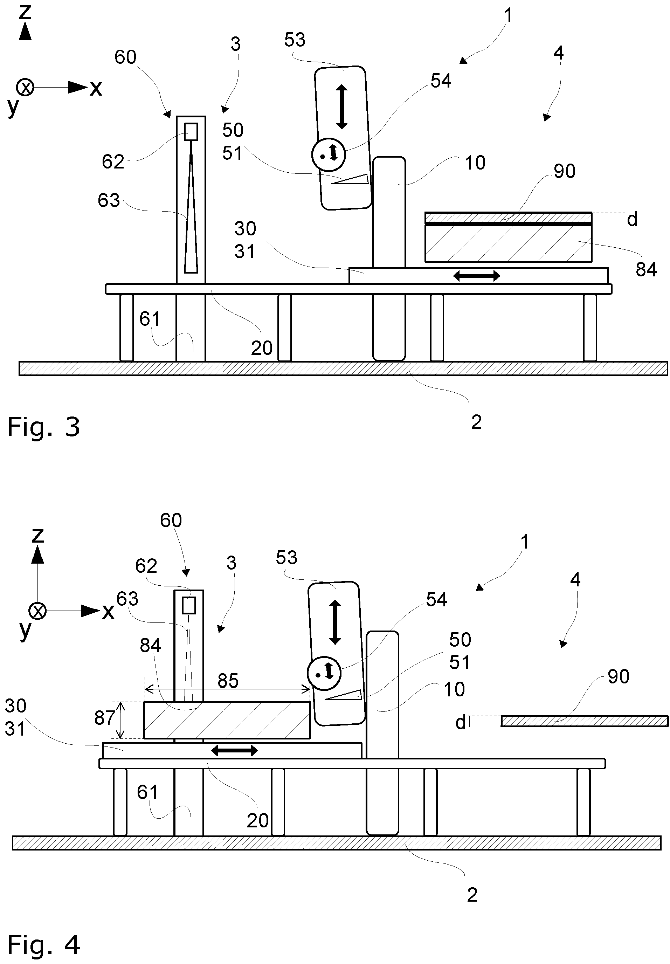

In Fig. 1 ist eine Anlage 1 zur Herstellung einer Folie bzw. Platte 90 schematisch in einer Seitenansicht dargestellt. Die gleiche Anlage 1 ist in der gleichen Ansicht in unterschiedlichen Zuständen hinsichtlich des Herstellungsstatus einer Folie bzw. Platte 90 in Fig. 2 bis Fig. 4 gezeigt. In dem vorliegend dargestellten und insofern bevorzugten Ausführungsbeispiel handelt es sich bei dem Herstellungsprodukt um eine Platte 90. Die Platte 90 ist beispielhaft in Fig. 4 rechts ersichtlich, wobei die Platte 90 der Anlage 1 als Herstellungsprodukt abgeführt wird. Darüber hinaus ist die Platte 90 auch in Fig. 2 als teilweise fertiggestelltes Teilprodukt, sowie in Fig. 3 als fertiges Herstellungsprodukt aufliegend auf einem Rest des Ausgangsmaterials (geschnittenes restliches Blockmaterial 84) dargestellt. Der Schritt des Entnehmens der Platte 90 als Herstellungsprodukt aus der Anlage 1 kann beispielsweise händisch erfolgen oder auch automatisch, wozu die Anlage 1 auch eine nicht dargestellte Entnahmeeinrichtung zur Entnahme einer Folie bzw. Platte 90 aufweisen kann.

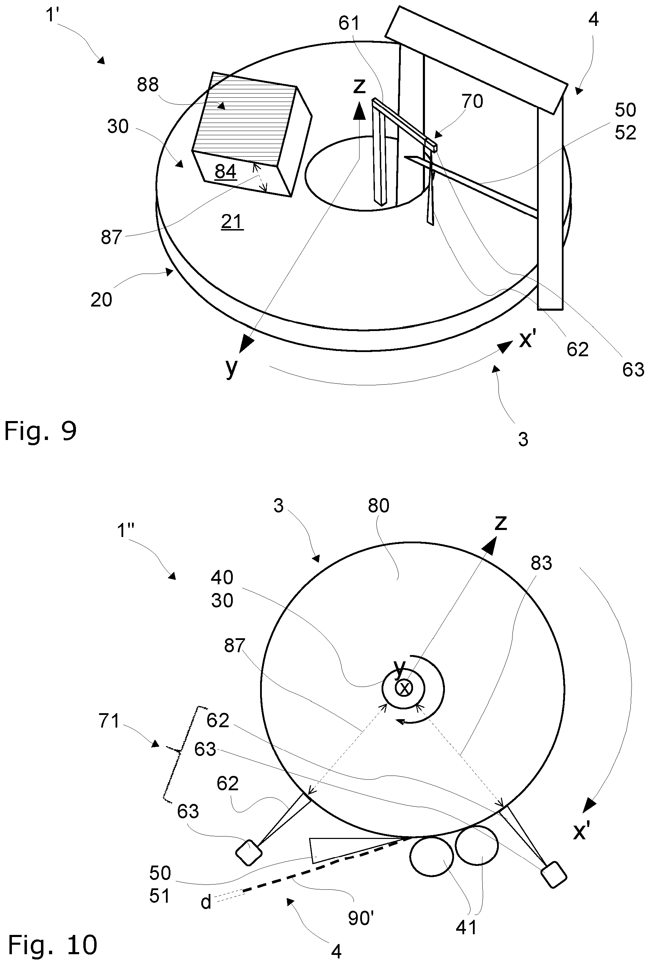

Alternativ zur Herstellung von Platten 90 kann die Anlage 1 auch zur Herstellung von Folien eingerichtet sein, wobei die Folien beispielsweises kontinuierlich abgeführt werden können. Die Herstellung einer Folie ist im Rahmen der Fig. 10, die eine weitere Ausführungsform einer Anlage 1" zur Herstellung einer Folie bzw. Platte zeigt, beispielhaft dargestellt, in Bezug auf die mittels einer gestrichelten Linie gekennzeichneten Folie 90'. Nachfolgend wird die Erfindung jedoch überwiegend am Beispiel der Herstellung von Platten 90 beschrieben, wobei die Vorteile ebenso auf die Herstellung von Folien 90' übertragbar sind.

Die Anlage 1 ist zur Herstellung der Platte 90 aus einem Blockmaterial 80 eingerichtet. Das Blockmaterial 80 ist das Ausgangsmaterial des Herstellungsprozesses, wobei es sich bei dem Blockmaterial 80 in dem vorliegend dargestellten und insofern bevorzugten Ausführungsbeispiel um einen Schaumstoffblock handelt.

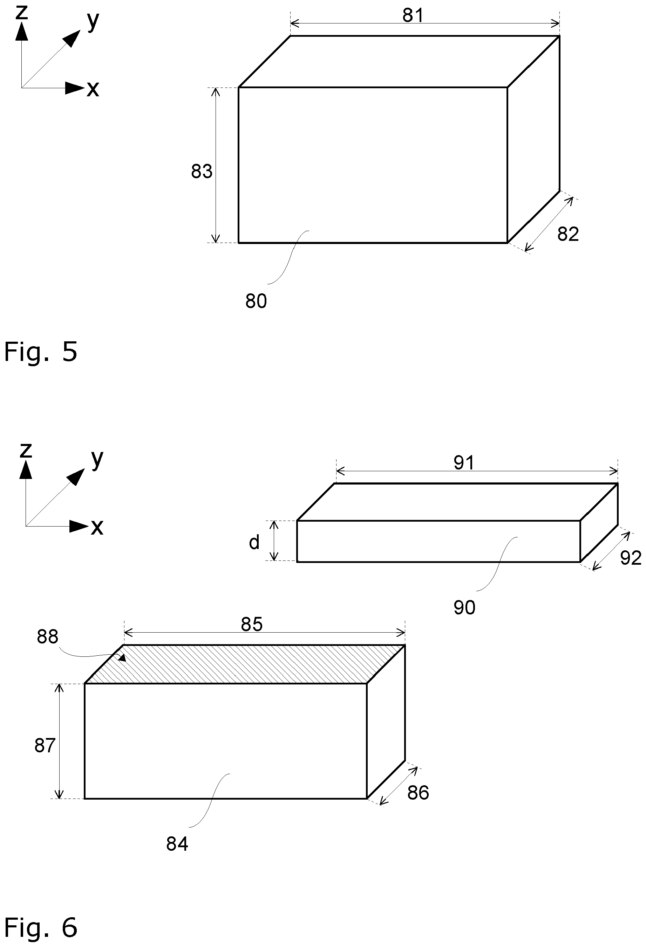

Das Blockmaterial 80 weist eine Ausgangsmaterial-Länge 81 auf, welche sich in Längenrichtung x erstreckt. Ferner weist das Blockmaterial 80 eine sich in Breitenrichtung y erstreckende Ausgangsmaterial-Breite 82 und eine sich in Höhenrichtung z erstreckende Ausgangsmaterial-Höhe 83 auf. Die genannten Richtungen orientieren sich an der Ausrichtung der Anlage 1 selbst. Ein entsprechendes Koordinatensystem ist in Fig. 1 bis Fig. 4 dargestellt. Die genannten Abmessungen des Blockmaterials 80 - Ausgangsmaterial-Länge 81, Ausgangsmaterial-Breite 82, Ausgangsmaterial-Höhe 83 - sind an jenem Koordinatensystem orientiert. Ein Schaumstoffblock als Blockmaterial 80 ist beispielhaft zur Veranschaulichung jener Abmessungen in Fig. 5 in einer perspektivischen Ansicht im ungeschnittenen Zustand dargestellt. Ferner sind in Fig. 6 in einer perspektivischen Ansicht ein bereits geschnittener Schaumstoffblock, also das geschnittene restliche Blockmaterial 84, sowie eine geschnittene Platte 90 dargestellt, wobei die Schnittfläche 88 des geschnittenen restlichen Blockmaterials 84 schraffiert gekennzeichnet ist. Das geschnittene restliche Blockmaterial 84 weist entsprechende Abmessungen auf, und zwar die Ausgangsmaterial-Länge 85, Ausgangsmaterial-Breite 86, Ausgangsmaterial-Höhe 87. Diese Abmessungen sind auch als "Ausgangsmaterial-Abmessungen" bezeichnet, da das geschnittene restliche Blockmaterial 84 erneut als Ausgangsmaterial für einen anschließenden weiteren Schnitt einer Platte 90 bereitgestellt werden kann (vgl. Fig. 4). Die Ausgangsmaterial-Längen 81 bzw. 85 und die Ausgangsmaterial-Breiten 82 bzw. 86 des Blockmaterials 80 bzw. geschnittenen restlichen Blockmaterials 84 sind dabei regelmäßig gleich groß. Die Ausgangsmaterial-Höhe 83 des Ausgangsmaterials ist vor dem Schneiden (Blockmaterial 80) selbstverständlich größer als die Ausgangsmaterial-Höhe 87 des Ausgangsmaterials nach dem Schneiden, also des geschnittenen restlichen Blockmaterials 84. Konkret ist die Ausgangsmaterial-Höhe 87 um die Dicke d der Platte 90 kleiner als die Ausgansmaterial-Höhe 83.

Die Abmessungen sind im Rahmen der Fig. 5 und Fig. 6 ersichtlich, sowie darüber hinaus auch teilweise in dem auf der Anlage 1 angeordneten Blockmaterial 80 bzw. geschnittenen restlichen Blockmaterial 84 gekennzeichnet. Der Übersichtlichkeit halber wurden jene Abmessungen in Fig. 2 und Fig. 4 jedoch nicht gekennzeichnet.

Dabei ist anzumerken, dass die Abmessungen grundsätzlich nicht immer optimal entlang der beschriebenen und an der Anlage 1 orientierten Richtungen - Längenrichtung x, Breitenrichtung y, Höhenrichtung z - verlaufen, insbesondere nicht die Ausgangsmaterial-Länge 81 sowie die Ausgangsmaterial-Breite 82. Regelmäßig wird jedoch, wie vorliegend dargestellt ein quaderförmiger Schaumstoffblock als Blockmaterial 80 verwendet, dessen Länge, Breite und Höhe entlang der Längenrichtung x, Breitenrichtung y, sowie Höhenrichtung z verläuft. Gegebenenfalls kann jedoch auch, vor allem bei härterem Ausgangsmaterial, eine gewisse vorbestimmte Schrägstellung des quaderförmigen Blockmaterials 80 gewünscht sein, sodass die Ausgangsmaterial-Länge 81 des quaderförmigen Blockmaterials 80 nicht perfekt entlang der Längenrichtung x, sondern leicht geneigt zu dieser, und die Ausgangsmaterial-Breite 82 nicht perfekt entlang der Breitenrichtung y, sondern leicht geneigt zu dieser verlaufen können. Sollte eine solche Schrägstellung gewünscht und bewusst vorgenommen sein, so kann diese auch bei den nachfolgend beschriebenen Messaufgaben berücksichtigt werden.

Grundsätzlich verläuft die Längenrichtung x entlang eines Auflagetischs 20 der Anlage 1, auf dem das Blockmaterials 80 zur Herstellung der Folie bzw. Platte 90 zu positionieren ist. Entlang der Längenrichtung x kann das Blockmaterial 80 gefördert werden. Insofern kann die Längenrichtung x auch als Förderrichtung bezeichnet werden. Dazu weist die Anlage 1 eine Fördereinheit 30 auf. Ferner kann die Längenrichtung x auch als Produktionsrichtung bezeichnet werden, da auch bezüglich des Herstellungsprozesses entlang jener Längenrichtung x die herzustellende Platte 90 hergestellt wird. Insofern kann die Anlage 1 auch grundsätzlich in zwei Bereiche, nämlich einen Einzugsbereich 3 und einen Abfuhrbereich 4, aufgeteilt werden (Fig. 1 bis Fig. 4 sowie Fig 7). In dem Einzugsbereich 3 wird das Ausgangsmaterial bereitgestellt, welches auf der Anlage 1 zum Herstellungsprodukt in Form der Platte 90 geschnitten wird. Demnach ist der in Produktionsrichtung hinter einer entsprechenden Schneideinheit 50 liegende Bereich der Abfuhrbereich 4, in welchem die fertig hergestellte Platte 90 sodann abgeführt wird.

In dem in Fig. 1 bis Fig. 4 dargestellten Ausführungsbeispiel ist die Fördereinheit 30 als ein verschiebbarer, angetriebener Auflageschlitten 31 ausgebildet. Der Auflageschlitten 31 kann in Längenrichtung x vor und zurück verfahren werden, wie durch den Doppelpfeil im Auflageschlitten 31 angedeutet. Die Geschwindigkeit der Fördereinheit 30 bzw. des Auflageschlittens 31 in Längenrichtung x kann auch als Vorschubgeschwindigkeit bzw. Fördergeschwindigkeit bezeichnet werden. Der Auflageschlitten 31 stellt eine im Wesentlichen ebene Auflagefläche zur Auflage des Blockmaterials 80 bereit. Die Auflagefläche erstreckt sich in der durch die Längenrichtung x und die Breitenrichtung y aufgespannten Horizontalebene. Dabei kann die Auflagefläche auch durch eine Lochplatte ausgebildet sein, mitsamt einem in Höhenrichtung z gesehen vor der Auflagefläche angeordneten Hohlraum in welchem ein Unterdruck, beispielsweise ein technisches Vakuum, eingerichtet wird. Auf diese Weise kann dafür gesorgt werden, dass das regelmäßig weiche Blockmaterial 80 stabil und fest auf der Auflagefläche aufliegt und nicht verrutscht, selbst wenn es zu dem später beschriebenen Schneidevorgang des Blockmaterials 80 kommt.

Die Breitenrichtung y verläuft grundsätzlich senkrecht zur beschriebenen Längenrichtung x und senkrecht zur Förderrichtung, entlang welcher das Blockmaterial 80 zwecks Schneidens in der Anlage 1 gefördert wird. Die Breitenrichtung y und die Längenrichtung x spannen eine Horizontalebene auf, welche regelmäßig parallel zum Hallenboden 2 verläuft, auf welchem Hallenboden 2 die Anlage 1 regelmäßig bestimmungsgemäß steht.

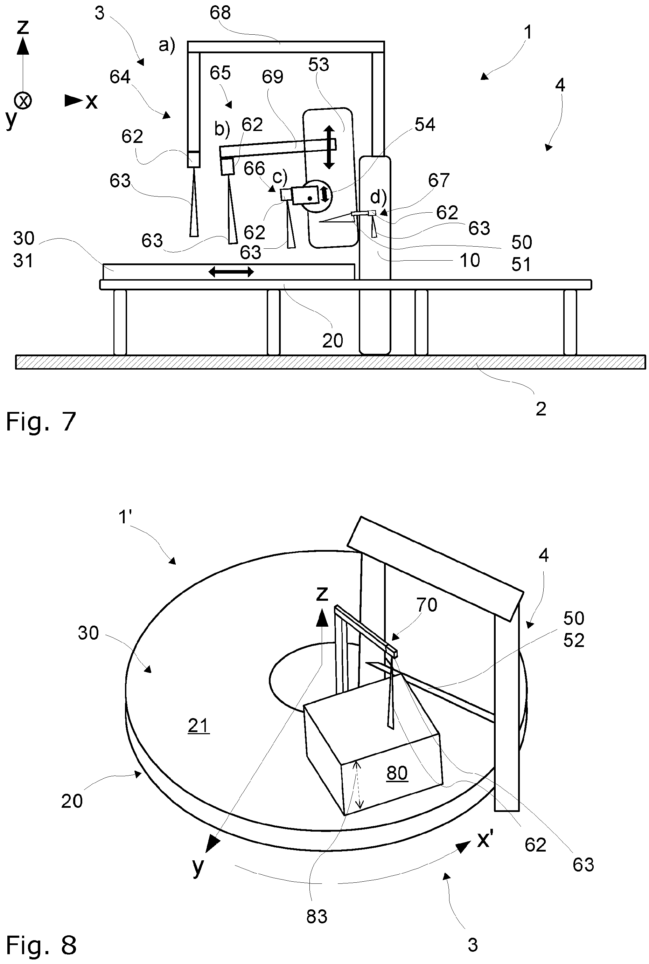

Die Höhenrichtung z wiederum ist die dritte senkrechte Richtung im Sinne eines kartesischen Koordinatensystems, wie es den beispielhaften Ausführungsbeispielen gemäß Fig. 1 bis Fig. 4 (und Fig. 7) zu entnehmen ist. Die Höhenrichtung z verläuft vertikal vom Hallenboden 2 nach oben. Entlang der Höhenrichtung z verläuft die Höhe des Blockmaterials 80, also die Ausgangsmaterial-Höhe 83, welche für die vorliegende Erfindung von zentralem Interesse ist. Vorschlagsgemäß gilt es nämlich eine Dicke d der hergestellten Folie bzw. Platte 90 zu bestimmen, welche Dicke d grundsätzlich der Erstreckung der geschnittenen Folie bzw. Platte 90 in eben jene Höhenrichtung z entspricht. Da sich das kartesische Koordinatensystem wie beschrieben an der Anlage 1 selbst orientiert, gilt dies selbstverständlich für den Fall, dass die hergestellte, also die geschnittene, Platte 90 beispielsweise auf dem Auflagetisch 20 aufliegt. Wenn die Platte 90 in ihrer Ausrichtung bzw. Lage geändert wird, bzw. abtransportiert wird, kann es auch sein, dass sich die zu bestimmende Dicke d nicht mehr in Höhenrichtung z erstreckt.

In Fig. 8 und Fig. 9 ist eine alternative Anlage 1' zur Herstellung einer Folie oder Platte 90 dargestellt. Eine weitere alternative Anlage 1" ist in Fig. 10 dargestellt. Während die Anlage 1 in Fig. 1 bis Fig. 4, sowie in Fig. 7 als reversierender Tisch mit dem vor und zurück in Längenrichtung x verfahrbaren Auflageschlitten 31 ausgeführt ist, ist die in Fig. 8 und Fig. 9 dargestellte Anlage 1' als Drehtisch mit einem runden Auflagetisch 20 ausgeführt.

Die Anlage 1 gemäß Fig. 1 bis Fig. 4 und Fig. 7 weist einen als Linear-Maschinentisch ausgebildeten Auflagetisch 20 auf. Jener Linear-Maschinentisch umfasst die Fördereinheit 30 und ist zur Auflage des Ausgangsmaterials eingerichtet. Die Fördereinheit 30 ist auflageseits auf dem Linear-Maschinentisch (Auflagetisch 20) vor entlang der Längenrichtung x und zurück entgegen der Längenrichtung x reversierend verfahrbar eingerichtet.

Die Anlage 1' gemäß Fig. 8 und Fig. 9 wiederum weist einen als Drehtisch ausgebildeten Auflagetisch 20 auf, welcher Auflagetisch 20 die Fördereinheit 30 umfasst und zur Auflage des Ausgangsmaterials eingerichtet ist. Die Fördereinheit 30 ist in dem dargestellten Ausführungsbeispiel selbst durch den Auflagetisch 20 ausgebildet, wobei die Fördereinheit 30 als umlaufende Auflagefläche 21 des Drehtischs ausgebildet und umlaufend entlang der Längenrichtung x' verfahrbar eingerichtet ist. Grundsätzlich ist es auch möglich, den dargestellten Drehtisch entgegen der Längenrichtung x' auch reversierend verfahrbar einzurichten. Auch der Drehtisch kann auflageseits mit einer Lochplatte eingerichtet sein, vor welcher in Höhenrichtung z gesehen ein Vakuum anliegen kann, um das Ausgangsmaterial positionssicher und fest auf dem Drehtisch zu halten.

Der als Drehtisch ausgebildete Auflagetisch 20 gemäß Fig. 8 und Fig. 9 stellt die Auflagefläche 21 für das zu schneidende Blockmaterial 80 bereit. Der Auflagetisch 20 ist als Kreisring ausgebildet und ist in Umfangsrichtung des Kreisrings verfahrbar. Insofern bildet der verfahrbare Teil des Auflagetischs 20 bei der Anlage 1' in Fig. 8 und Fig. 9 gleichzeitig auch die Fördereinheit 30 der Anlage 1' aus. Dementsprechend findet bei dem Ausführungsbeispiel gemäß Fig. 8 und Fig. 9 ein anderes System bezüglich der Richtungen als in Fig. 1 bis Fig. 4 und Fig. 7 Anwendung: Über das Bezugszeichen x' ist die Umfangsrichtung als Längenrichtung x' gekennzeichnet. Entlang dieser Längenrichtung x' kann der Auflagetisch 20 verfahren, weshalb die Längenrichtung x' auch erneut als Förderrichtung sowie ebenso als Produktionsrichtung der Platte 90 bzw. Folie bezeichnet werden kann. Die Höhenrichtung z erstreckt sich erneut vom nicht dargestellten bzw. nicht gekennzeichneten Hallenboden vertikal nach oben. In der Höhenrichtung z ist erneut die Dicke der geschnittenen Folie bzw. Platte 90 zu bestimmen. Ferner ist die Breitenrichtung y der radialen Richtung des als Rundtisch ausgeführten Auflagetischs 20 orientiert.

Auch in Fig. 10 ist ein vom kartesischen Koordinatensystem abweichendes, dem in Fig. 8 und Fig. 9 ähnelndes Koordinatensystem zur Orientierung dargestellt. Die in dem Ausführungsbeispiel der Fig. 10 dargestellte Anlage 1" weist keinen Auflagetisch 20 auf, sondern vielmehr ist das Ausgangsmaterial 80 als Rundblock auf einer Zentral-Walze 40 angeordnet. Die Anlage 1" gemäß Fig. 10 weist also die Zentral-Walze 40 zur Aufnahme des als Rundblock ausgebildeten Ausgangsmaterials auf. Dabei ist die Fördereinheit 30 der Anlage 1" derart durch die Zentral-Walze 40 selbst ausgebildet, dass die Zentral-Walze 40 zum Fördern des Ausgangsmaterials in Rotationsrichtung angetrieben werden kann. Die Rotationsrichtung der Zentral-Walze 40 ist mit der gekennzeichneten Längenrichtung x' übereinstimmend.

Bei der Zentral-Walze 40 der Anlage 1" handelt es sich also um eine angetriebene Walze, welche das Blockmaterial 80 umlaufend entlang der Längenrichtung x' fördern kann, wie durch den zentralen Pfeil in der Zentral-Walze 40 angedeutet. Insofern bildet die Zentral-Walze 40 bei der Anlage 1" in Fig. 10 auch die Fördereinheit 30 der Anlage 1" aus und fördert das Blockmaterial 80 selbst aktiv. Die Zentral-Walze 40 und somit das Blockmaterial 80 kann alternativ auch passiv durch das Vorsehen von den Rundblock antreibenden, separaten Antriebs-Walzen 41 angetrieben werden. Das System der Richtungen orientiert sich erneut an der Anlage 1": die Längenrichtung x' verläuft entsprechend der Förderrichtung der angetriebenen Zentral-Walze 40 bzw. entlang des Umfangs des als Rundblock ausgebildeten Ausgangsmaterials 80; die Breitenrichtung y verläuft senkrecht zur Längenrichtung x', in Fig. 10 in die Zeichenebene hinein; die Höhenrichtung z ist radial verlaufend vom Zentrum in Form der Mitte der Zentral-Walze 40.

Sowohl die in Fig. 8 und Fig. 9 als auch in Fig. 10 dargestellten Richtungen im Sinne des jeweiligen nicht-kartesischen Koordinatensystems stellen nur eine beispielhafte Momentaufnahme dar. So handelt es sich um lokale Koordinatensysteme. Es ist grundsätzlich jeweils der Moment bzw. Punkt in der jeweiligen Anlage 1' bzw. 1" von Interesse, in dem die Folie 90' bzw. Platte 90 gerade geschnitten wurde. Denn die vorliegende Erfindung bringt besondere Vorteile bei der Bestimmung der Dicke d der geschnittenen Folie 90' bzw. Platte 90.

Bei dem Ausführungsbeispiel gemäß Fig. 10 entspricht die Ausgangsmaterial-Höhe 83 der Wanddicke des als Hohlzylinder ausgeführten Blockmaterials 80. Die Ausgangsmaterial-Höhe 83 ist also in radialer Richtung bezüglich des Rundblocks verlaufend und in Fig. 10 in Rotationsrichtung (Längenrichtung x') gesehen kurz vor der Schneideinheit 50 mittels des gestrichelten Doppelpfeils gekennzeichnet. Insofern ist die Höhenrichtung z auch die radiale Richtung des als Hohlzylinder vorliegenden Ausgangsmaterials 80. Die Ausgangsmaterial-Höhe 87 nach dem Schneiden des Blockmaterials 80, also in Längenrichtung x' gesehen kurz hinter der Schneideinheit 50 ist ebenfalls über einen gestrichelten Doppelpfeil gekennzeichnet. Die Darstellung des Blockmaterials 80 ist nur exemplarisch in Fig. 10. Auch wenn es danach den Anschein hat, dass die Ausgangsmaterial-Höhe 83 vor dem Schneiden des Blockmaterials 80 sowie die Ausgangsmaterial-Höhe 87 nach dem Schneiden des Blockmaterials 80 gleich groß sind, ist in Wirklichkeit die nachfolgende Ausgangsmaterial-Höhe 87 nach dem Schneiden immer um die Dicke d der Folie 90' gegenüber der vorangehenden Ausgangsmaterial-Höhe 83 vor dem Schneiden des Blockmaterials 80 verringert.

Die nicht-dargestellte Ausgangsmaterial-Breite des Blockmaterials 80 in Fig. 10 entspricht der Höhe des Hohlzylinders, welcher die geometrische Form des Ausgangsmaterials 80 darstellt. Die Ausgangsmaterial-Länge wiederum ist bei dem Ausführungsbeispiel gemäß Fig. 10 nicht relevant. Sie kann als die Umfanglänge des als Rundblock und somit als Hohlzylinder ausgeführten Ausgangsmaterials 80 betrachtet werden. In dem Ausführungsbeispiel der Fig. 10 wird auf der Anlage 1" entgegen den vorangehenden Anlagen 1 bzw. 1' der Fig. 1 bis Fig. 4, bzw. Fig. 7, bzw. Fig. 8 und Fig. 9 keine Platte 90, sondern eine Folie 90' als Herstellungsprodukt hergestellt. Die Folie 90' ist durch die gestrichelte Linie in Fig. 10 angedeutet und wird kontinuierlich produziert, bis das Ausgangsmaterial 80 in Form des Rundblocks 80 aufgebraucht ist. Insofern wird die Folie 90' nahezu endlos produziert, bzw. um konkret zu sein, weist die Folie 90' eine Länge auf, die einem Vielfachen des Umfangs bzw. der Ausgangsmaterial-Länge des als Rundblock ausgeführten Ausgangsmaterials 80 entspricht.

Die beschriebenen Ausrichtungen der Abmessungen Ausgangsmaterial-Länge 81, Ausgangsmaterial-Breite 82, sowie Ausgangsmaterial-Höhe 83 im Verhältnis zu den drei Richtungen Längenrichtung x bzw. x', Breitenrichtung y, sowie Höhenrichtung z beziehen sich also vor allem auf den Zustand des Blockmaterials 80 bzw. der geschnittenen Folie bzw. Platte 90 unmittelbar nach bzw. vor bzw. beim Schneidvorgang. In dem Moment, in dem das Blockmaterial 80, wie beispielhaft in Fig. 3 dargestellt soeben geschnitten worden ist, liegt die geschnittene Platte 90 oben in Höhenrichtung z gesehen auf dem geschnittenen restlichen Blockmaterial 84 auf. Die Abmessungen der Höhe, Breite und Länge, sowohl der Platte 90 als auch des geschnittenen restlichen Blockmaterials 84, welches in einem anschließenden Durchgang als neues, zu schneidendes Blockmaterial zur Verfügung steht, sind dann in diesem in Fig. 3 dargestellten Zustand wie zuvor beschrieben entlang der drei Richtungen Längenrichtung x bzw. x', Breitenrichtung y, sowie Höhenrichtung z ausgerichtet.

Grundsätzlich wird zur Herstellung einer Folie 90' oder Platte 90 bei sämtlichen dargestellten Anlagen 1, 1', 1" gemäß Fig. 1 bis Fig. 4, Fig. 7, Fig. 8, Fig. 9, bzw. Fig. 10 wie folgt vorgegangen: Das als Blockmaterial 80 zur Verfügung gestellte Ausgangsmaterial wird derart bearbeitet, dass die Folie 90' bzw. die Platte 90 als Herstellungsprodukt aus dem Blockmaterial 80 entlang der Längenrichtung x bzw. x' herausgeschnitten wird. Dazu wird, zum Schneiden des Ausgangsmaterials, das Blockmaterial 80 entlang der Längenrichtung x bzw. x' zu einer Schneideinheit 50 gefördert. Die Fördereinheit 30 sorgt für die Förderung des Blockmaterials 80 zur Schneideinheit 50. Zum Schneiden selbst wird das Ausgangsmaterial 80 dann an dieser Schneideinheit 50 bzw. an einem in der Schneideinheit 50 integrierten Schneidewerkzeug vorbeigeführt, wodurch die Folie 90' bzw. die Platte 90 entlang der Längenrichtung x bzw. x' aus dem Blockmaterial 80 herausgeschnitten wird.

Dabei kann, wie in Fig. 1 bis Fig. 4, bzw. Fig. 7, sowie in Fig. 10 angedeutet, die Schneideinheit 50 einen Schneidkeil 51 aufweisen, an welchem das Blockmaterial 80 mithilfe der Fördereinheit 30 vorbeigeführt wird. In dem Schneidkeil 51 kann, wie aus dem Stand der Technik bekannt und eingangs beschrieben, ein umlaufendes Messer geführt sein. Auch die angesprochenen alternativen Schneidewerkzeuge sind bei den dargestellten Anlagen 1, 1', 1" grundsätzlich anwendbar.

Durch die Schneideinheit 51 wird das wird das Blockmaterial an seiner Oberseite aufgespalten, sodass die abgeschnittene Folie bzw. Platte 90 entsteht, die von dem Blockmaterial abgeschält wird. Der Schneidkeil 51 weist mit seiner Spitze entgegen der Längenrichtung x auf das zu schneidende Blockmaterial 80 (Fig. 1 bis Fig. 4 und Fig. 7) bzw. tangential in das als Rundblock ausgeführte Blockmaterial 80 gemäß Fig. 10.

Außerdem kann die Schneideinheit 50, wie im weiteren Ausführungsbeispiel der Anlage 1' in Fig. 8 und Fig. 9 angedeutet, auch als umlaufendes Messer 52 ohne Abstützung in einem Schneidkeil, sondern beispielsweise lediglich zwischen einer oberen und einer unteren Bandage geführt, ausgebildet sein. Auch das umlaufende Messer 52 wird nach dem Prinzip einer umlaufenden Säge kontinuierlich angetrieben. Das umlaufende Messer 52 bewegt sich bezogen auf die Anlage 1'in radialer Richtung fort, also in Breitenrichtung y gesehen, und somit quer zum der Schneideinheit 50 und dem umlaufenden Messer 52 zugeführten, zu schneidenden Blockmaterial 80. Auch Sägen oder etwa ein Drahtschneiden ist anwendbar.

Die Folie 90' bzw. die Platte 90 wird mittels der Schneideinheit 50 entlang der Längenrichtung x bzw. x' aus dem entlang der Längenrichtung x bzw. x' geförderten Blockmaterial herausgeschnitten.

Die Schneideinheit 50 ist bei der Anlage 1 gemäß Fig.1 bis Fig. 4 (sowie Fig. 7) in eine Schneideinheit-Halterung 53 integriert. Die Schneideinheit-Halterung 53 ist wiederum an einen Maschinenständer 10 angebunden. Der Maschinenständer 10 ist stationär feststehend angeordnet und fest mit dem Hallenboden 2 verbunden.

Die Schneideinheit 50 ist in dem vorliegend dargestellten und insofern bevorzugten Ausführungsbeispiel in Höhenrichtung z verstellbar eingerichtet, um die Vertikalposition der Schneideinheit 50, insbesondere des Schneidkeils 51, anpassen zu können. Dazu ist die Schneideinheit-Halterung 53 in Höhenrichtung z vor und zurück verschiebbar eingerichtet, wie durch den Doppelpfeil in der Schneideinheit-Halterung 53 angedeutet.

Die Verstellbarkeit der Vertikalposition der Schneideinheit 50 ist erforderlich, um mehrere Platten 90 bzw. alternativ auch mehrere Lagen an Folie 90' aus dem Ausgangsmaterial in Form des Blockmaterials 80 heraus herstellen zu können. So sinkt die Ausgangsmaterial-Höhe 83 bzw. 87, also die Höhe des Blockmaterials 80 mit jeder abgeschnittenen Schicht bzw. Lage. Dadurch wird das Nachführen der Schneideinheit 50 entgegen der Höhenrichtung z nach unten notwendig, sodass erneut eine weitere Lage einer Folie 90' bzw. eine weitere Platte 90, beispielsweise gleicher Dicke d, herausgeschnitten werden kann.

Um die Qualität beim Schneidvorgang selbst hoch zu halten, ist ferner eine Druckwalze 54 zum Andrücken der in Höhenrichtung z oben angeordneten Oberfläche des als Blockmaterial 80 ausgebildeten Ausgangsmaterials entgegen der Höhenrichtung z vorgesehen. Dadurch wird das Blockmaterial 80 nach unten entgegen der Höhenrichtung z gehalten. Das Blockmaterial 80 kann sich somit nicht vom Auflagetisch 20 bzw. dem Auflageschlitten 31 abheben, da die Druckwalze 54 ein Gegenhalten nach unten gewährleistet. Dies ist insbesondere wichtig, da durch die Schneideinheit 50 im Allgemeinen bzw. vorliegend den Schneidkeil 51 beim Schneiden relevante Kräfte auf das Blockmaterial 80 einwirken.

Die Druckwalze 54 ist in dem vorliegend dargestellten und insofern bevorzugten Ausführungsbeispiel eine angetriebene Walze. Dadurch wird auch die Förderung des Blockmaterials 80 und somit auch der geschnittenen Platte 90 in Längenrichtung x, also in Produktionsrichtung, durch die Druckwalze 54 unterstützt.

Die Druckwalze 54 ist in Längenrichtung x gesehen vor der Schneideinheit 50 angeordnet. Dabei ist die Anordnung in Längenrichtung x vor der Schneideinheit 50 darauf bezogen, dass der auf das Blockmaterial 80 wirkende Abschnitt der Druckwalze 54, also dort, wo ein Kontakt zwischen Druckwalze 54 und oberer Oberfläche des Blockmaterials 80 stattfindet, vor dem wirkenden Abschnitt der Schneideinheit 50 angeordnet ist: sprich vor der den Schnitt durchführenden Spitze des Messers im Schneidkeil 51. Mit dem Merkmal ist nicht gemeint, dass die gesamte Erstreckung der Druckwalze 54 in Längenrichtung x vor der gesamten Schneideinheit 50 liegen müsste. Vielmehr ist vorliegend und insofern bevorzugt die Druckwalze 54 in die Schneideinheit-Halterung 53 integriert, in welche Schneideinheit-Halterung 53 wiederum auch die Schneideinheit 50 integriert ist.

Die Druckwalze 54 ist darüber hinaus auch in Höhenrichtung z verstellbar eingerichtet, wie durch den Doppelpfeil in der Druckwalze 54 angedeutet. Bei dem vorliegend dargestellten und insofern bevorzugten Ausführungsbeispiel der Anlage 1 gemäß Fig. 1 bis Fig. 4 (ebenso wie bei der Anlage 1 gemäß Fig. 7) ist die Druckwalze 54 in Höhenrichtung z getrennt und unabhängig von der ebenfalls in Höhenrichtung z verstellbaren Schneideinheit 50 verstellbar eingerichtet. Auf diese Weise können auf derselben Anlage 1 vorteilhaft unterschiedliche Platten 90 bzw. auch Folien 90' unterschiedlicher Dicken durch einfache Anpassung der Vertikalposition der Druckwalze 54 bzw. der Druckwalze 54 in Relation zur Schneideinheit 50 möglichst flexibel hergestellt werden.

Es ist ebenso bei möglich, dass die Druckwalze 54 auch in einem Winkelversatz zur Höhenrichtung z verstellbar ist. In einem kleinen Winkel um die Breitenrichtung y entgegen der Längenrichtung x drehend, kann die Druckwalze 54 dann nicht exakt entlang der Höhenrichtung z, sondern um diesen kleinen Winkelversatz nach oben bzw. zurück nach unten verschoben werden. Auf diese Weise kann die Druckwalze 54 auch in ihrer Position in x-Richtung, also in Längenrichtung x, angepasst werden.

Durch die Verstellbarkeit der Vertikalposition der Schneideinheit-Halterung 54 und somit auch aller in diese integrierten weiteren Komponenten kann der Prozess zur Herstellung von Folien 90' bzw. Platten 90 verbessert werden. So kann Schneideinheit-Halterung 54 zunächst eine erste Vertikalposition einnehmen, die auf die gewünschte Dicke d des Herstellungsprodukts in Form der Folie 90' oder Platte 90 optimiert ist. Nach erfolgreichem Schneiden der Platte 90 kann die Schneideinheit-Halterung 54 sodann in Höhenrichtung z hoch gefahren werden, um eine zweite, höhere Vertikalposition einzunehmen. Daraufhin kann das geschnittene restliche Blockmaterial 84 schnell zurück entgegen der Längenrichtung x gesehen bis vor die Schneideinheit 50 gefahren werden. Da aufgrund der nach oben verschobenen Schneideinheit-Halterung 54 dann keine Kollisionsgefahr etwa zwischen Schneideinheit 50 bzw. Schneidkeil 51 und dem geschnittenen restlichen Blockmaterial 84 besteht, kann auch die Verfahrgeschwindigkeit des Auflageschlittens 31 entgegen der Längenrichtung x sehr hoch eingestellt sein. Zudem ist es beim Rückführen des Blockmaterials 80 in seine Ausgangsposition vor die Schneideinheit 50 für einen weiteren, nachfolgenden Schneidvorgang nicht mehr notwendig, das Blockmaterial 80 mit einer vorgegebenen auf den Schneidvorgang angepassten idealen und eher moderaten Vorschubgeschwindigkeit zu führen. Durch eine gezielte Anpassung der Vorschubgeschwindigkeit des Auflageschlittens 31, etwa wenn die Schneideinheit 50 in eine höhere Vertikalposition versetzt ist, kann die Produktionsgeschwindigkeit des Gesamtprozesses demnach erheblich gesteigert werden.

Wie anhand des lediglich im Rahmen der Fig. 1 gekennzeichneten Neigungswinkels α ersichtlich, ist die Schneideinheit-Halterung 53 um einen Neigungswinkel α um die Breitenrichtung y drehend entgegen der Längenrichtung x und zurück, also wieder in Längenrichtung x, schwenkbar eingerichtet. In der Darstellung gemäß Fig. 1 kann die Schneideinheit-Halterung 53 also entgegen dem Uhrzeigersinn aus einer aufrechten Ausrichtung um den Neigungswinkel o, wie dargestellt, zurück geschwenkt werden. Auch ein erneutes Zurückschwenken im Uhrzeigersinn in eine nicht-dargestellte perfekte aufrechte Ausrichtung ist möglich. Die Schneideinheit-Halterung 53 ist in dem Neigungswinkel o, wie eingezeichnet zwischen der Höhenrichtung z zurück entgegen der Längenrichtung x gemessen, zwischen -5° bis +30° schwenkbar. Der nicht-dargestellte Zustand von -5° bezieht sich um ein Schwenken der Oberseite der Schneideinheit-Halterung 53 aus dem in Fig. 1 dargestellten Zustand in Längenrichtung x bis über die Höhenrichtung z hinaus, und zwar um 5°.

Das Schwenken der Schneideinheit-Halterung 53 hat zur Folge, dass auch die Schneideinheit 50 geschwenkt wird und somit das Schneidinstrument, also etwa der Schneidkeil 51 mit umlaufendem Messer, schräg angestellt werden kann. Dies ist vorteilhaft abhängig von dem zu schneidenden Blockmaterial 80, insbesondere dessen Härte, sowie auch dem Parameter der gewünschten Dicke d der zu schneidenden Platte 90 oder auch Folie 90'.

Auch wenn der Neigungswinkel α lediglich im Rahmen von Fig. 1 gekennzeichnet ist, ist die Schneideinheit-Halterung 53 in den Fig. 2 bis Fig. 4 sowie auch in Fig. 7 um den Neigungswinkel α geneigt.

Grundsätzlich ist es bekannt, dass der Schneidvorgang bzw. der gesamte Herstellungsvorgang der Folie 90' bzw. Platte 90 einer Qualitätskontrolle unterzogen wird. Dabei ist es üblich, dass die Dicke d der hergestellten Folie 90' bzw. Platte 90 geprüft wird, beispielsweise dahingehend, ob die Folie 90' bzw. Platte 90 die gewünschte Dicke d aufweist. Zur Veranschaulichung ist in Fig. 5 das Blockmaterial 80 als Ausgangsmaterial mit seinen ursprünglichen Abmessungen Ausgangsmaterial-Länge 81, Ausgangsmaterial-Breite 82, sowie Ausgangsmaterial-Höhe 83 dargestellt, während in Fig. 6 das geschnittene restliche Blockmaterial 84 mit den nach einem einzelnen Schneidvorgang zur Herstellung der einzelnen Platte 90 resultierenden Abmessungen Ausgangsmaterial-Länge 85, Ausgangsmaterial-Breite 86, sowie Ausgangsmaterial-Höhe 87 dargestellt. Ferner ist in der Ansicht b) die geschnittene einzelne Platte 90 mitsamt ihren Abmessungen in Form der Dicke d, der Platten-Länge 91, sowie der Platten-Breite 92 dargestellt.

Die Qualitätskontrolle insbesondere der Dicke d der geschnittenen Platte 90 oder auch Folie 90' kann von entscheidender Bedeutung sein. So ist bei einer kontinuierlichen Herstellung mehrerer Platten 90 bzw. fortlaufender Folie 90' regelmäßig die Schneideinheit 50 bzw. das entsprechende Schneidwerkzeug (zum Beispiel der Schneidkeil 51 oder das umlaufende Messer 52) nachzustellen. So ändern das Blockmaterial 80 als Ausgangsmaterial mit jeder abgeschnittenen Schicht in Form einer Platte 90 bzw. einer Lage Folie 90' seine Ausgangsmaterial-Höhe 83 bzw. 87. Dies ist veranschaulichend anhand der Zusammenschau der Fig. 1 mit Fig. 4 zu erkennen, wobei in Fig. 1 das Ausgangsmaterial noch die Ausgangsmaterial-Höhe 83 aufweist, während in Fig. 4 nach dem Abschneiden der rechts dargestellten Platte 90 das geschnittene restliche Blockmaterial 84 nunmehr nur noch die Ausgangsmaterial-Höhe 87 aufweist, welche geringer ist als die Ausgangsmaterial-Höhe 83. Dementsprechend muss die Schneideinheit 50 bzw. der Schneidkeil 51 in Fig. 4 bei dem anschließenden Schneidvorgang tiefer eingestellt werden, als zuvor bei dem initialen Schneidvorgang gemäß der Anordnung in Fig. 1.

Zum Schneiden mehrerer Platten 90 bzw. mehrerer Lagen Folien 90' heraus aus einem einzigen Blockmaterial 80 als Ausgangmaterial werden eingangs regelmäßig der Anlage 1, 1', 1" bzw. einer entsprechenden Steuerungseinheit Werte vorgegeben, um welche Werte die Schneideinheit 50 nachzuzustellen (sprich regelmäßig abzusenken) ist, damit mehrere Platten 90 gleicher Dicke d bzw. eine Folie 90' mit einer einheitlichen Dicke d geschnitten werden können. Die Erfassung der tatsächlichen Dicke d der geschnittenen Platte 90 bzw. Folie 90' kann sodann dazu dienen, einen Folgefehler zu verhindern. Denn wird eine Platte 90 in Realität dünner geschnitten als ursprünglich gewünscht und dementsprechend eingestellt und wird sodann die Schneideinheit 50 nur entsprechend weiter verstellt, kann dies zu Folgefehlern führen und unter Umständen dazu, dass alle Platten 90 eine zu geringe Dicke d nach dem Schneiden aufweisen. Wird jedoch die wirkliche Dicke d der geschnittenen Platte 90 überprüft, dann kann bei einer zu dünn oder auch zu dick geschnittenen Platte 90 oder Folie 90' das Nachstellen der Schneideinheit 50 entsprechend angepasst werden.

Hier leistet die vorliegende Erfindung Abhilfe und bringt Vorteile bei der Qualitätskontrolle und der Automatisierung des Prozesses der Herstellung der Folie 90' bzw. Platte 90 mit sich. So ist vorliegend vorgeschlagen, dass die Dicke d der Folie 90' bzw. Platte 90 nicht mehr derart erfasst wird, dass direkt auf die Folie 90' bzw. Platte 90 als Herstellungsprodukt gemessen wird. Vielmehr wird die Dicke d der Folie 90' bzw. Platte 90 dadurch erfasst wird, dass zunächst die vorangehende Ausgangsmaterial-Höhe 83 vor dem Schneiden des Blockmaterials 80 und sodann die nachfolgende Ausgangsmaterial-Höhe 87 nach dem Schneiden des Blockmaterials 80 gemessen werden, sowie dass im Anschluss die zu bestimmende Dicke d der Folie 90' oder Platte 90 aus der Differenz der vorangehenden Ausgangsmaterial-Höhe 83 minus der nachfolgenden Ausgangsmaterial-Höhe 87 bestimmt wird. Das Messen der nachfolgenden Ausgangsmaterial-Höhe 87 nach dem Schneiden des Blockmaterials 80 entspricht dem Messen der Höhe des geschnittenen restlichen Blockmaterials 84 in Höhenrichtung z.

Vorschlagsgemäß wird somit ein indirektes Messverfahren zur Verfügung gestellt. Es wird nicht mehr auf das zu messende Herstellungsprodukt, nämlich die Folie 90' bzw. Platte 90, unmittelbar gemessen. Dadurch können viele Nachteile vermieden werden, die mit einem direkten Messverfahren auf das Produkt verbunden sind. So kann es im Stand der Technik beim Abführen der Folie 90' oder Platte 9 durch Abführeinrichtungen zur Beeinflussung der regelmäßig aus weichem Schaumstoffmaterial gebildeten Folie 90' oder Platte 90 kommen. Ein zu starkes Ziehen an der Folie 90' oder Platte 90 kann etwa zu einem Ausdünnen des Herstellungsprodukts führen. Demnach würde, wenn an einem solchen Punkt gemessen würde, eine dünnere Dicke bestimmt werden, als die eigentlich zu bestimmende Dicke d der Folie 90' bzw. Platte 90. Das vorschlagsgemäße Verfahren und die dargestellten und insofern bevorzugten Ausführungsbeispiele an Anlagen 1, 1', 1" weisen solche Nachteile nicht auf. So kann bei den Anlagen 1, 1', 1" vorteilhaft auch auf aufwendige weitere Einrichtungen verzichtet werden, die etwa einer Materialführung der hergestellten Folie 90' bzw. Platte 90 dienen, um korrekte Messergebnisse bei einem unmittelbaren Messen jener Folie 90' bzw. Platte 90 erforderlich wären. Beispielsweise ist keine Plattenfestlegung bei den dargestellten Anlage 1, 1', 1" notwendig.

Ferner sind die dargestellten Anlagen 1, 1', 1" und das vorgeschlagene Verfahren wesentlich flexibler, was die Herstellung völlig unterschiedlicher Folien 90' bzw. Platten 90 auf ein und derselben Anlage 1, 1', 1" betrifft. So sind die direkten Messverfahren des Standes der Technik, die unmittelbar auf das zu messende Herstellungsprodukt abzielen, auch auf das jeweilige Herstellungsprodukt in Form der Folie 90' bzw. Platte 90 insbesondere hinsichtlich deren zu erwartender Dicke d eingerichtet. Die beispielsweise optischen Messeinrichtungen sind auf die zu erwartende Dicke kalibriert. Bei einem Wechsel von einer ersten Foliendicke auf eine zweite, beispielsweise größere Foliendicke, ist regelmäßig eine aufwendige Anpassung des Verfahrens und gar der Anlagen 1, 1', 1" notwendig. Da wie vorliegend dargestellt vorschlagsgemäß jedoch nicht mehr das Herstellungsprodukt gemessen wird, sondern vielmehr das Ausgangsmaterial in Form des Blockmaterials 80 und durch Differenzbildung die Dicke d der hergestellten Folie 90' bzw. Platte 90 erfasst wird, entfallen diese Nachteile des Standes der Technik. Auch beim Herstellen völlig unterschiedlich dicker Folien 90' bzw. Platten 90 sind die Rahmenbedingungen zum Messen des Ausgangsmaterials in Form des Blockmaterials 80 ähnlich. Einerseits können regelmäßig die verwendeten Abmessungen des Blockmaterials 80 vorab bekannt und die optischen Messverfahren gezielt auf jene Rahmenbedingungen angepasst sein, auch wenn unterschiedlich dicke Folien 90' bzw. Platten 90 aus den Blockmaterialien 80 hergestellt werden sollen. Dies ist aber nicht unbedingt notwendig, da vorschlagsgemäß auch die verwendeten Messeinrichtungen einen konstanten Abstand zum Messobjekt, also zur Oberfläche des Blockmaterials 80 aufweisen können. Dies ist insbesondere der Fall, wenn die Messeinrichtungen mitgeführt werden, bei einem Zustellen der Schneideinheit 50.

Die Anlagen 1, 1', 1" sind demnach besonders vorteilhaft, wenn ein Plattenstärkenwechsel vorgenommen wird (Wechsel der Dicke d der herzustellenden Platte 90 bzw. auch Folie 90').

Es können zum Messen auch beispielsweise nicht unmittelbar die Höhen, also die vorangehende Ausgangsmaterial-Höhe 83 vor dem Schneiden des Blockmaterials 80 und die nachfolgende Ausgangsmaterial-Höhe 87 nach dem Schneiden, herangezogen werden, sondern etwa diese Höhen repräsentierende Messwerte. So kann zum Beispiel optisch gemessen werden, sodass die Messsignalverlauf repräsentativ für die entsprechende Höhe steht. Ferner kann auf die Oberfläche des Blockmaterials 80 gemessen werden und ein Abstand dieser Oberfläche zum Untergrund, auf dem das Blockmaterial 80 aufliegt, also etwa zur Auflagefläche 21 oder zum äußeren Mantel der Zentral-Walze 40, bekannt sein, woraus sodann die Höhe des Blockmaterials 80 erfasst werden kann.

Auch können Werte wie die Höhenverstellung einer in Höhenrichtung z verfahrbaren Schneideinheit-Halterung 53 bekannt sein und in die Messungen mit einfließen, wenn beispielsweise die Messungen ursprünglich auf die Höhe des Auflagetisches 20 bzw. die Auflagefläche 21 kalibriert sind.

Wie den Darstellungen des Ausführungsbeispiels der Anlage 1 aus Fig. 1 bis Fig. 4 zu entnehmen ist, ist zur Durchführung der beschriebenen Mess-Schritte eine Messeinrichtung 60 vorgesehen. Die Messeinrichtung 60 ist ortsfest angeordnet. Die Messeinrichtung 60 steht fest montiert auf dem Hallenboden 2. Dazu weist die Messeinrichtung 60 einen Messeinrichtungs-Ständer 61 auf, welcher fest auf dem Hallenboden 2 montiert ist. Somit ist die Messeinrichtung 60 selbstständig stationär feststehend angeordnet. Die Messeinrichtung 60 ist in der Anordnung gemäß Fig. 1 bis Fig. 4 somit bezüglich ihrer strukturellen Komponenten nicht mit den weiteren Komponenten der Anlage 1 verbunden. Es ist jedoch vorteilhaft zumindest eine Kommunikationsverbindung vorhanden. Auf diese Weise kann mittels einer Steuerungseinheit der Anlage 1 durch die mit der Messeinrichtung 60 gemessenen Werte Rückschlüsse zur Steuerung des Prozesses geschlossen und Anpassung gezielt veranlasst werden. Die Messeinrichtung 60 ist zum Messen auf eine Oberfläche eines Messobjekts, und zwar konkret in dem dargestellten Ausführungsbeispiel zum Messen auf die in Höhenrichtung z gesehen obere Oberfläche des Blockmaterials 80 eingerichtet.

Auch wenn die dargestellte Messeinrichtung 60 ortsfest angeordnet ist, könnte sie auch lediglich bezüglich einiger ihrer Komponenten im Raum ortsfest angeordnet sein. So ist es insbesondere möglich, die Messeinrichtung trotz ihrer Unabhängigkeit von den weiteren Komponenten der Anlage 1 in Höhenrichtung z verfahrbar einzurichten. Sodann kann der Abstand zum Messobjekt vorteilhaft konstant gehalten werden.

Die Stelle auf dem Messobjekt, an der die gewünschte Messung mittels der Messeinrichtung 60, bzw. im Rahmen der vorliegenden Anmeldung grundsätzlich, durchgeführt wird, wird auch allgemein als Messziel-Stelle bezeichnet. Im Unterschied hierzu ist, wenn von der Messeinrichtungs-Position die Rede ist, grundsätzlich die Position der Messeinrichtung 60 gemeint. Die Messeinrichtungs-Position beschreibt also grundsätzlich, wo die Messeinrichtung 60 im Raum angeordnet ist. Die Messeinrichtungs-Position bezieht sich also auf die drei Koordinaten der Messeinrichtung 60, also deren Position bezogen auf die Längenrichtung x, Breitenrichtung y und Höhenrichtung z. Regelmäßig kann mit einer gleichen Messeinrichtungs-Position jedoch gemeint sein, dass die Messeinrichtung 60 lediglich dieselbe Position bezüglich der Längenrichtung x sowie Breitenrichtung y aufweist, während die Position in Höhenrichtung z etwa zwischen den Messungen angepasst sein kann. Von einer Messeinrichtungs-Position aus können unter Umständen also auch durch ein und dieselbe Messeinrichtung 60 verschiedene Messziel-Stellen angesteuert und somit gemessen werden. Dies ist einerseits durch den Einsatz eines Liniensensors denkbar der mehrere Messziel-Stellen zu einem gleichen Zeitpunkt in Bezug auf die Breitenrichtung y des Blockmaterials 80 messen kann. Andererseits kann eine Messeinrichtung 60 auch zu verschiedenen Zeitpunkten hintereinander an derselben Messeinrichtungs-Position verschiedene Messziel-Stellen in Längenrichtung x auf dem zu messenden und vorbeifahrenden Messobjekt in Form des Blockmaterials 80 messen.

Bei dem vorliegend in Fig. 1 bis. Fig. 4 dargestellten Ausführungsbeispiel der Anlage 1 ist also die Messeinrichtung 60 an einer einzigen Messeinrichtungs-Position angeordnet. Die Messeinrichtung 60 gemäß Fig. 1 bis Fig. 4 ist bezüglich ihrer Messeinrichtungs-Position nicht veränderlich. Die Messeinrichtung 60 ist auf die Längenrichtung x bezogen an nur einer einzigen Messeinrichtungs-Position angeordnet und dort zum Messen sowohl der vorangehenden Ausgangsmaterial-Höhe 83 vor dem Schneiden des Ausgangsmaterials sowie der nachfolgenden Ausgangsmaterial-Höhe 87 nach dem Schneiden des Ausgangsmaterials an dieser einzigen Messeinrichtungs-Position eingerichtet. Dabei erfolgt die Messung entlang einer durch die Breitenrichtung y und Höhenrichtung z aufgespannten Messebene.

Bei der Messeinrichtung 60 handelt es sich um eine optische Messeinrichtung. Vorliegend wird optisch mittels eines laserbasierten Messsensors 62 auf die Oberfläche des Blockmaterials 80 gemessen, wie auch durch den Strahlenkegel 63 angedeutet ist.

Die Messeinrichtung 60 weist folglich nur einen einzigen Messsensor auf. Es können im Rahmen einer Messeinrichtung 60, beispielsweise auch an einer einzigen Messeinrichtungs-Position, auch mehrere Messsensoren verbaut sein.

Insbesondere ist es ebenso möglich über die sich in Breitenrichtung y erstreckende Breite der Anlage 1, also entlang der Ausgangsmaterial-Breite 82, 86 verteilt, mehrere Messsensoren in eine Messeinrichtung 60 zu integrieren, oder aber auch mehrerer unabhängige Messeinrichtungen vorzusehen. Auch die Integration eines Liniensensors, welcher in Breitenrichtung y gesehen einen größeren Messbereich abdeckt, ist möglich. Auch über die Länge verteilt, also entlang der Längenrichtung x, x' bzw. entlang der Ausgangsmaterial-Länge 81, 85, können mehrere Messsensoren vorgesehen sein, die eine Messeinrichtung ausbilden. Dies ist beispielsweise bei der in Fig. 10 dargestellten Messeinrichtung 71 mit zwei Messsensoren (laserbasierte Messsensoren 62) an zwei verschiedenen Messeinrichtungs-Positionen der Fall.

Alternative Anordnungen zu der beschriebenen Messeinrichtung 60, nämlich die Anordnungen der Messeinrichtungen 64, 65, 66, sowie 67 sind Fig. 7 zu entnehmen. Dabei zeigt Fig. 7 grundsätzlich die Anlage 1 zur Herstellung der Platte 90 als ein Herstellungsprodukt aus dem als Ausgangsmaterial vorgesehenen Blockmaterial 80, wie sie auch im Rahmen der Fig. 1 bis Fig. 4 dargestellt und beschrieben worden ist. Demnach kann auf die vorangehenden und auch nachfolgenden Ausführungen hierzu verwiesen werden. Bei der Anlage 1 gemäß Fig. 7 sind alternative Anordnungen der Messeinrichtungen 64, 65, 66, 67 dargestellt. Es sind in der Anlage 1 also abweichende Messeinrichtungs-Positionen von jenen gemäß der Darstellung der Anlage 1 in Fig. 1 bis Fig. 4 verwirklicht. Dabei veranschaulicht Fig. 7 auf einen Schlag in einer Darstellung gleich vier verschiedene alternative bzw. sich potentiell ergänzende Anordnungen einer Messeinrichtung. In der Anlage 1 können die vier Messeinrichtungen 64, 65, 66, sowie 67 grundsätzlich jeweils einzeln allein vorgesehen sein und für die vorteilhafte Messung der Dicke d der Platte 90 eingesetzt werden. Die Messeinrichtungen 64, 65, 66, sowie 67, sowie ferner die im Rahmen der Fig. 1 bis Fig. 4 dargestellte Messeinrichtung 60 könnten auch gemeinsam bzw. in unterschiedlichen Kombinationen mehrfach in einer Anlage 1 vorgesehen sein. Es wurde der Übersichtlichkeit und Vereinfachung halber in Fig. 7 auf die Darstellung des Blockmaterials 80, welches in Platten 90 zu schneiden ist, verzichtet.

In einer ersten alternativen Variante zur Messeinrichtung 60 gemäß Fig. 1 bis Fig. 4 ist die Messeinrichtung 64 relativ unveränderlich dem Maschinenständer 10 verbunden - gekennzeichnet als Variante a) in Fig. 7. Die Messeinrichtung 64 ist über die Messeinrichtungs-Aufhängung 68 mit dem Maschinenständer 10 verbunden. Da der Maschinenständer 10 stationär feststehend angeordnet und fest mit dem Hallenboden 2 verbunden ist, ist auch die Messeinrichtung 64 ortsfest angeordnet.

In einer weiteren Variante ist die Messeinrichtung 65 relativ unveränderlich mit der Schneideinheit-Halterung 53 verbunden - gekennzeichnet als Variante b) in Fig. 7. Durch die zuvor bereits beschriebene und auch in der Ausführungsform gemäß Fig. 7 vorhandene, vertikale Verschiebbarkeit der Schneideinheit-Halterung 53 ist demnach auch die Messeinrichtung 65 vertikal verschiebbar und insofern nicht mehr absolut ortsfest eingerichtet. Es wird vorteilhaft gewährleistet, dass die Messeinrichtung 65 relativ zur Schneideinheit 50 bzw. dem Schneidkeil 51 immer die gleiche Position hat.

In einer weiteren Variante ist die Messeinrichtung 66 bezüglich ihrer relativen Lage unveränderlich mit der Druckwalze 54 verbunden - gekennzeichnet als Variante c) in Fig. 7. Durch die zuvor bereits beschriebene und auch in der Ausführungsform gemäß Fig. 7 vorhandene, vertikale Verschiebbarkeit der Druckwalze 54 ist demnach auch die Messeinrichtung 66 vertikal verschiebbar und insofern nicht mehr absolut ortsfest eingerichtet. Insofern die Druckwalze 54, wie vorliegend dargestellt, auch unabhängig von der Schneideinheit-Halterung 54 bzw. relativ zu dieser vertikal verschiebbar eingerichtet ist, ist vorteilhaft gewährleistet, dass die Vertikalposition der Messeinrichtung 66 individuell einstellbar, und zwar unabhängig von der Schneideinheit 50 bzw. dem Schneidkeil 51, ist. Es wird weiterhin vorteilhaft gewährleistet, dass die Messeinrichtung 66 relativ zur Druckwalze 54 immer die gleiche Position hat. Auf diese Weise kann auch einfach der Abstand der Messeinrichtung 66 zum Messobjekt, also zum Blockmaterial 80, konstant gehalten werden.

In einer weiteren Variante ist die Messeinrichtung 67 bezüglich ihrer relativen Lage unveränderlich mit der Schneideinheit 50 bzw. dem Schneidkeil 51 verbunden - gekennzeichnet als Variante d) in Fig. 7. Dabei ist die Ausrichtung der Messeinrichtung 67 derart, dass die Messung in Längenrichtung x gesehen hinter der Schneideinheit 50 bzw. dem Schneidkeil 51 erfolgt. Im Unterscheid zu den zuvor beschriebenen Messeinrichtungen ist jene Messeinrichtung 67 bzgl. ihre Messeinrichtungs-Position also nicht mehr im Einzugsbereich 3 der Anlage 1 angeordnet, sondern vielmehr im Abfuhrbereich 4.

Bei den dargestellten alternativen Messeinrichtungen 64, 65, 66, 67 handelt es sich wie bei der in Fig. 1 bis Fig. 4 dargestellten Messeinrichtung 60 ebenfalls um optische Messeinrichtungen mit einem laserbasierten Messsensor 62 (Strahlenkegel 63). Dies gilt auch für die im Rahmen der in Fig. 8 und Fig. 9 gezeigten Anlage 1' sowie im Rahmen der in Fig. 10 gezeigten Anlage 1" beiden dargestellten Messeinrichtungen 70 und 71 (laserbasierter Messsensor 62 mit Strahlenkegel 63).

Die dargestellten und insofern bevorzugten Messeinrichtungen 60, 64, 65, 66, 67, 70, 71 sind allesamt zum Messen auf die in Höhenrichtung z gesehen obere Oberfläche des Blockmaterials 80 eingerichtet, um die Ausgangsmaterial-Höhe 83 bzw. 87 messen zu können. Ferner sind die Messeinrichtungen 60, 64, 65, 66, 67, 70, 71 derart zum Messen der Ausgangsmaterial-Höhe 83, 87 eingerichtet und angeordnet, dass die jeweilige Messeinrichtung 60, 64, 65, 66, 67, 70, 71 sowohl eine vorangehende Ausgangsmaterial-Höhe 83 vor dem Schneiden des Blockmaterials 80 sowie daran anschließend auch eine nachfolgende Ausgangsmaterial-Höhe 87 nach dem Schneiden des Blockmaterials 80 (also die Höhe des geschnittenen restlichen Blockmaterials 84) messen kann.

Die Messeinrichtung 71 gemäß dem in Fig. 10 dargestellten Ausführungsbeispiel der Anlage 1" ist auf die Längenrichtung x' bezogen an einer ersten Messeinrichtungs-Position und an einer zweiten Messeinrichtungs-Position angeordnet. Dies ist dadurch realisiert, dass ein laserbasierter Messsensor 62 als ein erster Messensor an der ersten Messeinrichtungs-Position sowie ein weiterer laserbasierter Messsensor 62 als ein zweiter Messsensor an der zweiten Messeinrichtungs-Position vorgesehen ist. Die derart ausgebildete Messeinrichtung 71 ist zum Messen der vorangehenden Ausgangsmaterial-Höhe 83 vor dem Schneiden des Ausgangsmaterials an der ersten Messeinrichtungs-Position sowie zum Messen der nachfolgenden Ausgangsmaterial-Höhe 87 nach dem Schneiden des Ausgangsmaterials an der zweiten Messeinrichtungs-Position eingerichtet.

Auch an den weiteren dargestellten Anlagen 1 sowie 1' (vgl. Fig. 1 bis Fig. 4, Fig. 7, sowie Fig. 8 und Fig. 9) ist eine Anordnung einer solchen Messeinrichtung denkbar, die mehrere Messsensoren aufweist, wie etwa einen ersten Messsensor zum Messen der vorangehenden Ausgangsmaterial-Höhe 83 vor dem Schneiden des Ausgangsmaterials an der ersten Messeinrichtungs-Position sowie einen zweiten Messsensor zum Messen der nachfolgenden Ausgangsmaterial-Höhe 87 nach dem Schneiden des Ausgangsmaterials an der zweiten Messeinrichtungs-Position.

Grundsätzlich ist es besonders vorteilhaft, wie anhand der Ausführungsbeispiele gemäß Fig. 1 bis Fig. 4 in Bezug auf die Messeinrichtung 60 gezeigt, sowie ferner in Bezug auf die Messeinrichtungen 64, 65 und 66 der Varianten a), b) und c) aus Fig. 7, sowie auch in Bezug auf die Messeinrichtung 70 in Fig. 7 und Fig. 8 gezeigt, dass die Messeinrichtung 60, 64, 65, 66, 70 zum Messen der Ausgangsmaterial-Höhe 83 in Längenrichtung x, x' gesehen vor der Schneideinheit 50 eingerichtet und angeordnet ist. Dieser Bereich vor der Schneideinheit 50 kann auch als Einzugsbereich 3 der Anlage 1, 1' bzw. 1" bezeichnet werden. In dem Einzugsbereich 3 ist das Blockmaterial 80 noch in dem ungeschnittenen Zustand, weshalb sich die genaue Messung der Ausgangsmaterial-Höhe 83 vor dem Schneiden dort anbietet. Der Bereich hinter der Schneideinheit 50 kann auch als Abfuhrbereich 4 der Anlage 1, 1' bzw. 1" bezeichnet werden, denn dort wird das Herstellungsprodukt in Form der Folie 90' bzw. Platten 90 regelmäßig aus der Anlage 1, 1', 1" abgeführt. Dort wird gemäß Stand der Technik regelmäßig die Dicke d des Produktes (Folie 90' bzw. Platte 90) unmittelbar gemessen. Da bei den dargestellten Anlagen 1, 1', 1" auf eine Anordnung von Messeinrichtungen dort verzichtet wird, kann das Abführen des Herstellungsproduktes leichter realisiert werden und die Anlagen 1, 1', 1" insgesamt kompakter ausgeführt werden.

Bei der in Fig. 8 und Fig. 9 dargestellten Anlage 1' kann die Schneideinheit 50, welche als nur mittels Bandagen abgestütztes, umlaufendes Messer 52 ausgebildet ist, ebenfalls in Höhenrichtung z verstellt werden. Ferner ist es auch denkbar, die Anlage 1' bezüglich der Schneideinheit 50 so auszustatten, dass das umlaufende Messer 52 auch eine schräge Anstellung (um die Breitenrichtung y geschwenkt) gegenüber dem zu schneidenden Blockmaterial 80, also erneut in einen Anstellwinkel, versetzt werden kann.

Dies gilt analog auch für die im Rahmen der Anlage 1" in Fig. 10 dargestellte und beschriebene Schneideinheit 50. Dabei könnte der entsprechende Schneidkeil 51 ebenfalls in Höhenrichtung z verstellbar eingerichtet sein. Der Schneidkeil 51 kann sodann also näher in Richtung Zentral-Walze 40 bzw. auch erneut zurück verschoben werden. Vorliegend und insofern bevorzugt ist jedoch, dass die Zentral-Walze 40 in Richtung Schneidkeil 51 verschoben und somit zugestellt werden kann. Ferner ist auch ein Ändern des Anstellwinkels des Schneidkeils 51 zum Schneiden des als Rundblock ausgeführten Blockmaterials 80 möglich.

Mittels der dargestellten Anlagen 1, 1' sowie 1" zur Herstellung von Platten 90 bzw. Folien 90' aus dem Blockmaterial 80 aus Schaumstoff ist das vorschlagsgemäße vorteilhafte Verfahren zum Erfassen einer Dicke d einer Folie 90' oder Platte 90 durchführbar. Im Rahmen des vorschlagsgemäßen Verfahrens wird die Folie 90' bzw. Platte 90 als Herstellungsprodukt aus dem als Ausgangsmaterial vorgesehenen Blockmaterial 80 (Schaumstoffblock) geschnitten. Dabei wird, zum Schneiden des Ausgangsmaterials, das Ausgangsmaterial entlang der Längenrichtung x bzw. x' zur Schneideinheit 50 gefördert, wobei die Schneideinheit 50 wiederum die Folie 90' bzw. Platte 90 aus dem Ausgangsmaterial entlang der Längenrichtung x, x' herausschneidet. Die zu bestimmende Dicke d der geschnittenen Folie 90' bzw. Platte 90 wird sodann dadurch erfasst, dass:
- die Messeinrichtungen 60, 64, 65, 66, 67, 70, bzw. 71 eine vorangehende Ausgangsmaterial-Höhe 83 vor dem Schneiden des Blockmaterials 80 sowie darüber hinaus eine nachfolgende Ausgangsmaterial-Höhe 87 nach dem Schneiden des Blockmaterials 80 messen, und
- die Dicke d der Folie 90' bzw. Platte 90 aus der Differenz der vorangehenden Ausgangsmaterial-Höhe 83 minus der nachfolgenden Ausgangsmaterial-Höhe 87 bestimmt wird.

Es können ebenso die jeweilige Höhe repräsentierende Messwerte gemessen werden, wie beispielsweise die Laufzeit eines optischen Messsignals und diese sodann entsprechend analog verrechnet werden, sodass schließlich auf die Dicke d der Folie 90' bzw. Platte 90 geschlossen werden kann.

Die Anlagen 1, 1', 1" weisen zur Durchführung des Verfahrens zusätzlich nicht dargestellte Auswerteeinheiten auf, welche die Rechenoperationen wie die Differenzbildung oder auch die Umrechnung von Messsignalen der Messeinrichtungen 60, 64, 65, 66, 67, 70, bzw. 71 in entsprechende Dicken-Werte umsetzen.

Ferner weisen die Anlagen 1, 1', 1" auch nicht dargestellte Steuerungseinheiten auf, mittels welcher der auf der entsprechende Anlage 1, 1', 1" ablaufende Herstellungsprozess von Folien 90' bzw. Platten 90 gesteuert werden kann. Die Steuerungseinheiten können dazu bevorzugt auch in einer Kommunikationsverbindung mit der Auswerteeinheit bzw. den Messeinrichtungen 60, 64, 65, 66, 67, 70, bzw. 71 stehen. So kann das Erfassen der Dicke d der geschnittenen Folien 90' bzw. Platten 90 einerseits zur Qualitätskontrolle des Herstellungsprodukts eingesetzt werden, andererseits jedoch auch zur Steuerung des weiteren Herstellungsprozesses im Sinne einer Regelung.

Ist es beispielsweise das Ziel, eine Platte 90 der Dicke d = 10 mm herzustellen, dann kann das aus dem Erfassen der Dicke d einer ersten geschnittenen Platte 90 bekannte Ergebnis zur Steuerung der folgenden Schnitte vorteilhaft genutzt werden. So ist regelmäßig als Ausgangsgröße des Prozesses bekannt, welche Ausgangsmaterial-Höhe 83 ursprünglich das als Blockmaterial 80 vorliegende Ausgangsmaterial aufweist. Sodann wird die Schneideinheit 50 auf eine bestimmte erste Vertikalposition eingestellt, sodass ein bestimmungsgemäßer Schnitt zum Erzielen einer Dicke d von 10 mm erzielt wird. Die Anlage 1, 1', 1" ist dann regelmäßig so eingestellt, dass nach einem ersten erfolgten Schnitt die Schneideinheit 50 bezüglich ihrer vertikalen Position angepasst wird, und die Schneideinheit 50 auf eine zweite Vertikalposition, um 10 mm verringert, eingestellt wird. Wird wie vorgeschlagen nun die wirkliche aus dem ersten Schnitt resultierende Dicke d, in dem genannten Beispiel 8 mm, erfasst, so kann das vertikale Nachstellen der Schneideinheit 50 (beispielsweise die vertikale Verschiebung der Schneideinheit-Halterung 52) für den anschließenden Schnitt angepasst werden. So können erfolgreich Folgefehler vermieden werden. Vorschlagsgemäß kann an den dargestellten Anlagen 1, 1', 1" demnach ein Verfahren zum Betreiben durchgeführt werden, wobei die Folie 90' bzw. Platte 90 mittels der Schneideinheit 50 aus dem als Ausgangsmaterial vorgesehenen Blockmaterial 80 (Schaumstoffblock) herausgeschnitten wird, und wobei, zur Qualitätskontrolle der geschnittenen Folie 90' bzw. Platte 90, ein zuvor bzw. nachfolgend beschriebenes Verfahren zum Erfassen einer Dicke d einer Folie 90' bzw. Platte 90 durchgeführt wird.

Es ist dabei besonders vorteilhaft, wenn die Anlage 1, 1', 1" derart betrieben wird, dass, abhängig von einem Ergebnis des Verfahrens zum Erfassen der Dicke d der Folie 90' bzw. Platte 90 in Bezug auf eine vorangehende Lage, die Schneideinheit 50 bezüglich ihrer Position in Relation zum Ausgangsmaterial, insbesondere in Höhenrichtung z, zum Schneiden einer nachfolgenden Lage verstellt wird. Konkret wird die Schneideinheit 50 wie beschrieben abhängig von der erfasste Dicke d mehr oder weniger nach unten entgegen der Höhenrichtung z verstellt.

Besonders vorteilhaft ist bei den dargestellten Anlagen 1, 1', 1", dass die jeweiligen Messeinrichtungen 60, 64, 65, 66, 67, 70, 71 zum Messen der Ausgangsmaterial-Länge 81, 85 eingerichtet und angeordnet sind. Dadurch ist ein Verfahren zum Betreiben der Anlage 1, 1', 1" möglich, bei dem mittels der Messeinrichtung 60, 64, 65, 66, 67, 70, 71 die Länge des Ausgangsmaterials in Längenrichtung x, x' erfasst wird. So kann durch die jeweilige Messeinrichtung 60, 64, 65, 66, 67, 70, 71 durch das Messen auf das Blockmaterial 80 ein Startzeitpunkt, an dem das Blockmaterial 80 in den Messbereich eintritt und ein Endzeitpunkt beim Austritt des Blockmaterials 80 bestimmt werden, woraus die Ausgangsmaterial-Länge 81, 85 erfassbar ist. Es kann auf das Vorsehen zusätzlicher Lichtschranken in der Anlage 1, 1', 1", die diese Aufgabe sonst übernehmen würden, verzichtet werden. Bei dem Ausführungsbeispiel des Rundblocks in Fig. 10 kann der Umfang des Blockmaterials 80 auf diese Weise bestimmt werden, wobei nicht der Eintritt und Austritt des Blockmaterials 80 selbst, sondern eines mit dem Blockmaterial 80 mitdrehenden Referenz-Punktes erfasst werden kann.

Diese grundsätzliche Erfassung der Erstreckung in Längenrichtung x, x' bzw. allgemein der Position des Blockmaterials 80 in jene Richtung kann auch dazu genutzt werden, den Herstellvorgang zu steuern. So kann erneut bei den Anlagen 1 gemäß Fig. 1 bis Fig. 4 und Fig. 7, sowie bei der Anlage 1' gemäß Fig. 8 und Fig. 9 die Kenntnis über die Position des Blockmaterials in Längenrichtung x, x' dazu verwendet werden, die Fördergeschwindigkeit anzupassen, insbesondere zu erhöhen, wenn gerade kein Schnitt des Blockmaterials 80 erfolgt. Auch im Ein- und Austrittsbereich mit dem Schneidewerkzeug kann sodann gezielt die Fördergeschwindigkeit verringert werden, während die Fördergeschwindigkeit beim Durchführen des Schnitts selbst im mittleren Bereich erhöht werden kann.

Die Anlagen 1, 1', 1" können vorteilhaft betrieben werden, indem die Fördergeschwindigkeit des Ausgangsmaterials in Längenrichtung x, x' abhängig von einer durch die Messeinrichtung 60, 64, 65, 66, 67, 70, 71 erfassten Lage des Ausgangsmaterials angepasst wird. Insgesamt können dadurch die Toleranzen bei der Schnittdicke verbessert und die Produktionsgeschwindigkeiten erhöht werden.

Auch kann eine vorteilhafte Steuerung bei den dargestellten Anlagen 1, 1', 1" dadurch erfolgen, dass eine Vertikalposition der Schneideinheit 50 in Höhenrichtung z abhängig von einer durch die Messeinrichtung 60, 64, 65, 66, 67, 70, 71 erfassten Lage des Ausgangsmaterials angepasst wird.

Insgesamt ist mit den dargestellten und beschriebenen Anlagen 1, 1', 1" demnach eine vorteilhafte Herstellung von Folien 90' bzw. Platten 90 aus dem Blockmaterial 80 möglich, indem das beschriebene Verfahren zum Erfassen der Dicke d der Folie 90' bzw. Platte 90 auf der Anlage 1, 1', 1" abläuft und das Ergebnis zur Steuerung des Herstellverfahrens genutzt wird. Beispielsweise dadurch, dass in entsprechenden Momenten eine vertikale Verstellung der Schneideinheit 50 erfolgt, oder auch dadurch, dass eine ursprünglich vorgegebene vertikale Verstellung der Schneideinheit 50 zum Schneiden einer nachfolgenden Platte 90 bzw. Lage einer Folie 90' auf Grundlage der erfassten Dicke korrigiert und geändert wird. Die vorliegende Erfindung macht es demnach möglich, den Herstellungsprozess von Folien 90' bzw. Platten 90 aus Blockmaterial dahingehend weiter zu verbessern, dass der Herstellungsprozess weiter automatisiert und prozesssicherer hinsichtlich einer einheitlichen Qualität der Herstellungsprodukte ablaufen kann.

### Bezugszeichenliste

| | | | |
|---|---|---|---|
| 1, 1', 1" | Anlage | 62 | laserbasierter Messsensor |
| 2 | Hallenboden | 63 | Strahlenkegel |
| 3 | Einzugsbereich | 68, 69 | Messeinrichtungs-Aufhängung |
| 4 | Abfuhrbereich | | |
| 10 | Maschinenständer | 80 | Blockmaterial |
| | | 81, 85 | Ausgangsmaterial-Länge |
| 20 | Auflagetisch | 82, 86 | Ausgangsmaterial-Breite |
| 21 | Auflagefläche | 83, 87 | Ausgangsmaterial-Höhe |
| | | 84 | geschnittenes restliches |
| 30 | Fördereinheit | | Blockmaterial |
| 31 | Auflageschlitten | 88 | Schnittfläche |
| 40 | Zentral-Walze | 90 | Platte |
| 41 | Antriebs-Walzen | 90' | Folie |
| | | 91 | Platten-Länge |
| 50 | Schneideinheit | 92 | Platten-Breite |
| 51 | Schneidkeil | | |
| 52 | umlaufendes Messer | | |
| 53 | Schneideinheit-Halterung | x, x' | Längenrichtung |
| 54 | Druckwalze | y | Breitenrichtung |
| | | z | Höhenrichtung |
| 60, 64, 65, 66, 67, 70, 71 | Messeinrichtung | d | Dicke der Folie bzw. Platte |
| 61 | Messeinrichtungs-Ständer | | |

## Patentansprüche

1. Verfahren zum Erfassen einer Dicke (d) einer Folie (90') oder Platte (90) aus Schaumstoff, wobei die Folie (90') oder Platte (90) als ein Herstellungsprodukt aus einem als Ausgangsmaterial vorgesehenen Schaumstoffblock (80), geschnitten wird, wobei das Ausgangsmaterial eine sich in Längenrichtung (x; x') erstreckende Ausgangsmaterial-Länge (81, 85), eine sich in Breitenrichtung (y) erstreckende Ausgangsmaterial-Breite (82, 86) und eine sich in Höhenrichtung (z) erstreckende Ausgangsmaterial-Höhe (83, 87) aufweist, wobei:
- zum Schneiden des Ausgangsmaterials, das Ausgangsmaterial entlang der Längenrichtung (x; x') zu einer Schneideinheit (50) gefördert wird und die Schneideinheit (50) die Folie (90') oder Platte (90) aus dem Ausgangsmaterial entlang der Längenrichtung (x; x') herausschneidet, und wobei
- zum Erfassen der Dicke (d) der Folie (90') oder Platte (90), die Dicke (d) entlang der Höhenrichtung (z) erfasst wird,
**dadurch gekennzeichnet, dass** die Dicke (d) der Folie (90') oder Platte (90) dadurch erfasst wird, dass:
- ein eine vorangehende Ausgangsmaterial-Höhe (83; 87) vor dem Schneiden des Ausgangsmaterials repräsentierender Messwert sowie ein eine nachfolgende Ausgangsmaterial-Höhe (87) nach dem Schneiden des Ausgangsmaterials repräsentierender Messwert gemessen werden und
- mittels einer Auswerteeinheit die Dicke (d) der Folie (90') oder Platte (90) aus der Differenz des die vorangehende Ausgangsmaterial-Höhe (83; 87) repräsentierenden Messwerts minus des die nachfolgende Ausgangsmaterial-Höhe (87) repräsentierenden Messwerts bestimmt wird.

2. Verfahren zum Erfassen einer Dicke (d) einer Folie (90') oder Platte (90) nach Anspruch 1, **dadurch gekennzeichnet, dass** die vorangehende Ausgangsmaterial-Höhe (83; 87) sowie die nachfolgende Ausgangsmaterial-Höhe (87) durch eine, vorzugsweise optische, Messeinrichtung (60, 64, 65, 66, 67, 70, 71), insbesondere bezüglich der Längenrichtung (x; x') und Breitenrichtung (y) an der gleichen Messziel-Stelle, gemessen werden.

3. Anlage zur Herstellung einer Folie (90') oder Platte (90) aus Schaumstoff als ein Herstellungsprodukt aus einem als Ausgangsmaterial vorgesehenen Schaumstoffblock (80), wobei das Ausgangsmaterial eine sich in Längenrichtung (x; x') erstreckende Ausgangsmaterial-Länge (81, 85), eine sich in Breitenrichtung (y) erstreckende Ausgangsmaterial-Breite (82, 86) und eine sich in Höhenrichtung (z) erstreckende Ausgangsmaterial-Höhe (83, 87) aufweist, mit:
- einer Fördereinheit (30) zum Fördern des Ausgangsmaterials entlang der Längenrichtung (x; x'), einer Schneideinheit (50) zum Herausschneiden der Folie (90') oder Platte (90) aus dem Ausgangsmaterial entlang der Längenrichtung (x; x'), mit einem Messerbalken mit umlaufend geführten Messer oder oszillierendem Messer und mit
- einer Messeinrichtung (60, 64, 65, 66, 67, 70, 71) zum Messen auf eine Oberfläche eines Messobjekts,
wobei die Fördereinheit (30) derart eingerichtet ist, dass, zum Schneiden des Ausgangsmaterials, das Ausgangsmaterial entlang der Längenrichtung (x; x') an der Schneideinheit (50) vorbei gefördert wird,
**dadurch gekennzeichnet, dass** die Messeinrichtung (60, 64, 65, 66, 67, 70, 71) derart zum Messen der Ausgangsmaterial-Höhe (83, 87) eingerichtet und angeordnet ist, dass die Messeinrichtung (60, 64, 65, 66, 67, 70, 71) eine vorangehende Ausgangsmaterial-Höhe (83; 87) vor dem Schneiden des Ausgangsmaterials sowie eine nachfolgende Ausgangsmaterial-Höhe (87) nach dem Schneiden des Ausgangsmaterials misst, wobei die Anlage ferner eine Auswerteinheit aufweist, mittels welcher die Dicke (d) der Folie (90') oder Platte (90) aus der Differenz der vorangehende Ausgangsmaterial-Höhe (83; 87) minus der nachfolgenden Ausgangsmaterial-Höhe (87) bestimmt wird.

4. Anlage zur Herstellung einer Folie (90') oder Platte (90) nach Anspruch 3, **dadurch gekennzeichnet, dass** ein Linear-Maschinentisch vorgesehen ist, der die Fördereinheit (30) umfasst und zur Auflage des Ausgangsmaterials eingerichtet ist, und dass die Fördereinheit (30) auflageseits auf dem Linear-Maschinentisch vor entlang der Längenrichtung (x) und zurück entgegen der Längenrichtung (x) reversierend verfahrbar eingerichtet ist.

5. Anlage zur Herstellung einer Folie (90') oder Platte (90) nach einem der Ansprüche 3 bis 4, **dadurch gekennzeichnet, dass** die Messeinrichtung (60, 64, 65, 66, 67, 70) auf die Längenrichtung (x; x') bezogen an nur einer einzigen Messeinrichtungs-Position angeordnet und zum Messen der vorangehenden Ausgangsmaterial-Höhe (83; 87) vor dem Schneiden des Ausgangsmaterials sowie der nachfolgenden Ausgangsmaterial-Höhe (87) nach dem Schneiden des Ausgangsmaterials an dieser einzigen Messeinrichtungs-Position, insbesondere in einer durch die Breitenrichtung (y) und Höhenrichtung (z) aufgespannten Messebene, eingerichtet ist.

6. Anlage zur Herstellung einer Folie (90') oder Platte (90) nach einem der Ansprüche 3 bis 4, **dadurch gekennzeichnet, dass** die Messeinrichtung (64, 65, 66, 67, 71) auf die Längenrichtung (x; x') bezogen wenigstens an einer ersten Messeinrichtungs-Position und an einer zweiten Messeinrichtungs-Position angeordnet ist, wobei, vorzugsweise, die Messeinrichtung (64, 65, 66, 67, 71) zum Messen der vorangehenden Ausgangsmaterial-Höhe (83; 87) vor dem Schneiden des Ausgangsmaterials an der ersten Messeinrichtungs-Position sowie der nachfolgenden Ausgangsmaterial-Höhe (87) nach dem Schneiden des Ausgangsmaterials an der zweiten Messeinrichtungs-Position eingerichtet ist, und wobei, weiter vorzugsweise, die Messeinrichtung (64, 65, 66, 67, 71) durch einen an der ersten Messeinrichtungs-Position angeordneten ersten Messsensor sowie durch einen an der zweiten Messeinrichtungs-Position angeordneten zweiten Messsensor ausgebildet ist.

7. Anlage zur Herstellung einer Folie (90') oder Platte (90) nach einem der Ansprüche 3 bis 6, **dadurch gekennzeichnet, dass** die Schneideinheit (50) in eine Schneideinheit-Halterung (53) integriert ist, wobei die Schneideinheit-Halterung (53) mit einem stationär feststehenden Maschinenständer (10) verbunden ist, vorzugsweise weiterhin, dass die Schneideinheit-Halterung (53) um einen Neigungswinkel (a), insbesondere von -5° bis 30°, bevorzugt von 0° bis 7°, um die Breitenrichtung (y) drehend entgegen der Längenrichtung (x; x') und zurück schwenkbar eingerichtet ist.

8. Anlage zur Herstellung einer Folie (90') oder Platte (90) nach einem der Ansprüche 3 bis 7, **dadurch gekennzeichnet, dass** eine Druckwalze (54) zum Andrücken einer Oberfläche des Ausgangsmaterials entgegen der Höhenrichtung (z) vorgesehen ist, wobei die Druckwalze (54) in Längenrichtung (x; x') gesehen vor der Schneideinheit (50) angeordnet ist, vorzugsweise weiterhin, dass die Druckwalze (54) in die Schneideinheit-Halterung (53) integriert ist.

9. Anlage zur Herstellung einer Folie (90') oder Platte (90) nach Anspruch 8, **dadurch gekennzeichnet, dass** die Druckwalze (54) in Höhenrichtung (z), vorzugsweise getrennt und unabhängig von der Schneideinheit (50), verstellbar eingerichtet ist, vorzugsweise weiterhin, dass die Druckwalze (54) in Längenrichtung (x; x'), vorzugsweise getrennt und unabhängig von der Schneideinheit (50), verstellbar eingerichtet ist.

10. Anlage zur Herstellung einer Folie (90') oder Platte (90) nach einem der Ansprüche 3 bis 9, **dadurch gekennzeichnet, dass** die Messeinrichtung (60, 64, 65, 66, 70) zum Messen der Ausgangsmaterial-Höhe (83, 87) in Längenrichtung (x; x') gesehen vor der Schneideinheit (50) eingerichtet und angeordnet ist.

11. Verfahren zum Betreiben einer Anlage nach einem der Ansprüche 3 bis 10, wobei die Folie (90') oder Platte (90) mittels der Schneideinheit (50) aus dem als Ausgangsmaterial vorgesehenen Schaumstoffblock (80), herausgeschnitten wird, und wobei, zur Qualitätskontrolle der geschnittenen Folie (90') oder Platte (90), ein Verfahren zum Erfassen einer Dicke (d) einer Folie (90') oder Platte (90) nach einem der Ansprüche 1 bis 2 durchgeführt wird.

12. Verfahren zum Betreiben einer Anlage nach Anspruch 11, **dadurch gekennzeichnet, dass**, abhängig von einem Ergebnis des Verfahrens zum Erfassen der Dicke (d) der Folie (90') oder Platte (90) in Bezug auf eine vorangehende Lage, die Schneideinheit (50) bezüglich ihrer Position in Relation zum Ausgangsmaterial, insbesondere in Höhenrichtung (z), zum Schneiden einer nachfolgenden Lage verstellt wird.

13. Verfahren zum Betreiben einer Anlage nach einem der Ansprüche 11 bis 12, **dadurch gekennzeichnet, dass** mittels der Messeinrichtung (60, 64, 65, 66, 67, 70, 71) die Länge des Ausgangsmaterials in Längenrichtung (x; x') erfasst wird.

14. Verfahren zum Betreiben einer Anlage nach einem der Ansprüche 11 bis 13, **dadurch gekennzeichnet, dass** eine Fördergeschwindigkeit des Ausgangsmaterials abhängig von einer durch die Messeinrichtung (60, 64, 65, 66, 67, 70, 71) erfassten Lage des Ausgangsmaterials angepasst wird.

15. Verfahren zum Betreiben einer Anlage nach einem der Ansprüche 11 bis 14, **dadurch gekennzeichnet, dass** die Folie (90') nach dem Schneiden, vorzugsweise kontinuierlich, aus der Anlage abgeführt wird, oder dass die Platte (90) nach dem Schneiden aus der Anlage abtransportiert wird.

## Claims

1. A method of detecting a thickness (d) of a film (90') or sheet (90) made of foam, wherein said film (90') or sheet (90) is cut, as an article of manufacture, from a foam block (80) provided as a starting material, wherein the starting material has a starting material length (81, 85) extending in the length direction (x; x'), a starting material width (82, 86) extending in the width direction (y), and a starting material height (83, 87) extending in the height direction (z), wherein:
- for cutting the starting material, said starting material is conveyed to a cutting unit (50) along the length direction (x; x') and the cutting unit (50) cuts the film (90') or sheet (90) from the starting material along said length direction (x; x'), and wherein
- for detecting the thickness (d) of the film (90') or sheet (90), said
thickness (d) is detected along the height direction (z), **characterised in that** the thickness (d) of the film (90') or sheet (90) is detected **in that**:
- a value of measurement representing a preceding starting material height (83; 87) obtained prior to the cutting of the starting material and a value of measurement representing a succeeding starting material height (87) obtained subsequent to the cutting of the starting material are determined, and
- an evaluation unit is used to determine the thickness (d) of the film (90') or sheet (90) as the difference that results from the value of measurement representing said preceding starting material height (83; 87) minus the value of measurement representing said succeeding starting material height (87).

2. The method of detecting a thickness (d) of a film (90') or sheet (90) as claimed in claim 1, **characterised in that** both the preceding starting material height (83; 87) and the succeeding starting material height (87) are measured, by a preferably optical measuring device (60, 64, 65, 66, 67, 70, 71), at the same measurement target position, in particular with regard to the length direction (x, x') and the width direction (y).

3. A system for manufacturing a film (90') or sheet (90) of foam as an article of manufacture made of a foam block (80) provided as a starting material, wherein the starting material has a starting material length (81, 85) extending in the length direction (x; x'), a starting material width (82, 86) extending in the width direction (y), and a starting material height (83, 87) extending in the height direction (z), including:
- a conveyor unit (30) for conveying the starting material along the length direction (x; x'), a cutting unit (50) for cutting the film (90') or sheet (90) from the starting material along said length direction (x; x') using a cutter bar with a rotatingly guided cutter blade or an oscillating cutter blade, and including
- a measuring device (60, 64, 65, 66, 67, 70, 71) for performing measurements on a surface of an object of measurement,
wherein the conveyor unit (30) is configured such that, for cutting the starting material, said starting material is conveyed along the length direction (x; x') past the cutting unit (50),
**characterised in that** the measuring device (60, 64, 65, 66, 67, 70, 71) is configured and arranged for measuring the starting material height (83, 87) in such a way that the measuring device (60, 64, 65, 66, 67, 70, 71) measures a preceding starting material height (83; 87) prior to the cutting of the starting material and a succeeding starting material height (87) subsequent to the cutting of the starting material, wherein the system further has an evaluation unit by means of which the thickness (d) of the film (90') or sheet (90) is determined as the difference resulting from the preceding starting material height (83; 87) minus the succeeding starting material height (87).

4. The system for manufacturing a film (90') or sheet (90) as claimed in claim 3, **characterised in that** a linear machine table is provided which comprises the conveyor unit (30) and is configured for supporting the starting material, and **in that** the conveyor unit (30) is configured to be disposed on the supporting side of the linear machine table, such that it can be moved forwards along the length direction (x) and backwards in the direction opposite to said length direction (x).

5. The system for manufacturing a film (90') or sheet (90) as claimed in any one of claims 3 to 4, **characterised in that** the measuring device (60, 64, 65, 66, 67, 70) is arranged at only one single measuring device position in relation to the length direction (x; x') and is used to measure the preceding starting material height (83; 87) prior to the cutting of the starting material and the succeeding starting material height (87) subsequent to the cutting of the starting material at this single measuring device position, in particular in a measuring plane defined by the width direction (y) and the height direction (z).

6. The system for manufacturing a film (90') or sheet (90) as claimed in any one of claims 3 to 4, **characterised in that** the measuring device (64, 65, 66, 67, 71) is arranged at least at a first measuring device position and a second measuring device position with regard to the length direction (x; x'), wherein, preferably, the measuring device (64, 65, 66, 67, 71) is configured for measuring the preceding starting material height (83; 87), carried out prior to the cutting of the starting material, at said first measuring device position and for measuring the succeeding starting material height (87), carried out subsequent to the cutting of the starting material, at said second measuring device position, and wherein, further preferably, the measuring device (64, 65, 66, 67, 71) is realised by a first measuring sensor arranged at the first measuring device position and by a second measuring sensor arranged at the second measuring device position.

7. The system for manufacturing a film (90') or sheet (90) as claimed in any one of claims 3 to 6, **characterised in that** the cutting unit (50) is integrated into a cutting unit holder (53), wherein said cutting unit holder (53) is connected to a stationary machine stand (10), further preferably **in that** the cutting unit holder (53) is configured to be rotatable about the width direction (y) by an inclination angle (α), in particular of between -5° and 30°, preferably of between 0° and 7°, such that it may be pivotable against the length direction (x, x') and back.

8. The system for manufacturing a film (90') or sheet (90) as claimed in any one of claims 3 to 7, **characterised in that** a pressure roller (54) for pressing a surface of the starting material against the height direction (z) is provided, wherein said pressure roller (54) is arranged before the cutting unit (50) when considered in the length direction (x; x'), further preferably **in that** the pressure roller (54) is integrated into the cutting unit holder (53).

9. The system for manufacturing a film (90') or sheet (90) as claimed in claim 8, **characterised in that** the pressure roller (54) is configured to be adjustable in the height direction (z), preferably separately and independently of the cutting unit (50), further preferably **in that** the pressure roller (54) is configured to be adjustable in the length direction (x; x'), preferably separately and independently of the cutting unit (50).

10. The system for manufacturing a film (90') or sheet (90) as claimed in any one of claims 3 to 9, **characterised in that** the measuring device (60, 64, 65, 66, 70) for measuring the starting material height (83, 87) is configured and arranged before the cutting unit (50) when considered in the length direction (x; x').

11. A method of operating a system as claimed in any one of claims 3 to 10, wherein the film (90') or sheet (90) is cut from the foam block (80) provided as a starting material by means of the cutting unit (50), and wherein, for the purpose of quality control of the cut film (90') or sheet (90), a method of detecting a thickness (d) of a film (90') or sheet (90) as claimed in any one of claims 1 to 2 is carried out.

12. The method of operating a system as claimed in claim 11, **characterised in that**, depending on a result of the method of detecting a thickness (d) of the film (90') or sheet (90) with respect to a preceding layer, the cutting unit (50) is positionally adjusted in relation to the starting material, in particular in the height direction (z), for cutting a subsequent layer.

13. The method of operating a system as claimed in any one of claims 11 to 12, **characterised in that** the measuring device (60, 64, 65, 66, 67, 70, 71) is used to detect the length of the starting material in the length direction (x; x').

14. The method of operating a system as claimed in any one of claims 11 to 13, **characterised in that** the conveying speed of the starting material is adjusted depending on a position of said starting material as detected by the measuring device (60, 64, 65, 66, 67, 70, 71).

15. The method of operating a system as claimed in any one of claims 11 to 14, **characterised in that**, subsequent to the cutting operation, the film (90') is removed from the system, preferably in a continuous manner, or **in that**, subsequent to the cutting, the sheet (90) is transported away from the system.

## Revendications

1. Procédé de détection d'une épaisseur (d) d'une feuille (90') ou d'une plaque (90) en mousse, dans lequel ladite feuille (90') ou la plaque (90) est découpée en tant que produit de fabrication à partir d'un bloc de mousse (80) prévu en tant que matériau de départ, dans lequel le matériau de départ présente une longueur de matériau de départ (81, 85) s'étendant dans la direction de la longueur (x; x'), une largeur de matériau de départ (82, 86) s'étendant dans la direction de la largeur (y) et une hauteur de matériau de départ (83, 87) s'étendant dans la direction de la hauteur (z), dans lequel:
- pour couper le matériau de départ, le matériau de départ est transporté dans la direction de la longueur (x; x') jusqu'à une unité de coupe (50), et l'unité de coupe (50) coupe la feuille (90') ou la plaque (90) dans le matériau de départ suivant la direction de la longueur (x ; x'), et dans lequel
- pour détecter l'épaisseur (d) de la feuille (90') ou de la plaque (90), l'épaisseur (d) est détectée suivant la direction de la hauteur (z),
**caractérisé en ce que** l'épaisseur (d) de la feuille (90') ou de la plaque (90) est détectée par le fait que:
- une valeur de mesure représentant une hauteur de matériau de départ (83; 87) précédente avant la découpe du matériau de départ ainsi qu'une valeur de mesure représentant une hauteur de matériau de départ (87) suivante après la découpe du matériau de départ sont mesurées et
- l'épaisseur (d) de la feuille (90') ou de la plaque (90) est déterminée au moyen d'une unité d'évaluation à partir de la différence entre la valeur de mesure représentant la hauteur de matériau de départ (83; 87) précédente moins la valeur de mesure représentant la hauteur de matériau de départ (87) suivante.

2. Procédé de détection d'une épaisseur (d) d'une feuille (90') ou d'une plaque (90) selon la revendication 1, **caractérisé en ce que** la hauteur de matériau de départ (83 ; 87) précédente et la hauteur de matériau de départ (87) suivante sont mesurées par un dispositif de mesure (60, 64, 65, 66, 67, 70, 71), de préférence optique, en particulier en ce qui concerne la direction de la longueur (x; x') et la direction de la largeur (y) sur le même point de cible de mesure.

3. Installation de production d'une feuille (90') ou d'une plaque (90) en mousse en tant que produit de fabrication à partir d'un bloc de mousse (80) prévu en tant que matériau de départ, dans lequel le matériau de départ présente une longueur de matériau de départ (81) s'étendant dans la direction de la longueur (x ; x' , 85), une largeur de matériau de départ (82, 86) s'étendant dans la direction de la largeur (y) et une hauteur de matériau de départ (83, 87) s'étendant dans la direction de la hauteur (z), comprenant:
- une unité de transport (30) pour transporter le matériau de départ suivant la direction de la longueur (x ; x'), une unité de découpe (50) pour découper la feuille (90') ou la plaque (90) dans le matériau de départ suivant la direction de la longueur (x; x'), une barre à couteaux ayant des couteaux guidés en circulation ou des couteaux oscillants, et avec
- un dispositif de mesure (60, 64, 65, 66, 67, 70, 71) destiné à mesurer sur une surface d'un objet de mesure,
dans lequel l'unité de transport (30) est configurée de telle manière que, pour couper le matériau de départ, le matériau de départ est transporté de manière à défiler devant l'unité de coupe (50) dans la direction de la longueur (x ; x'),
**caractérisé en ce que** le dispositif de mesure (60, 64, 65, 66, 67, 70, 71) est conçu et agencé pour mesurer la hauteur de matériau de départ (83, 87) de telle sorte que le dispositif de mesure (60, 64, 65, 66, 67, 70, 71) mesure une hauteur de matériau de départ (83 ; 87) précédente avant la découpe du matériau de départ et une hauteur de matériau de départ (87) suivante après la découpe du matériau de départ, dans lequel ladite installation comprend en outre une unité d'évaluation au moyen de laquelle l'épaisseur (d) de la feuille (90') ou de la plaque (90) est déterminée à partir de la différence de la hauteur de matériau de départ (83 ; 87) précédente moins la hauteur de matériau de départ (87) suivante.

4. Installation de production d'une feuille (90') ou d'une plaque (90) selon la revendication 3, **caractérisée en ce qu'**il est prévu une table de machine linéaire qui comprend l'unité de transport (30) et est configurée pour supporter le matériau de départ, et que l'unité de transport (30) est configurée pour pouvoir être déplacée, sur le côté support sur la table de machine linéaire, de manière réversible vers l'avant suivant la direction de la longueur (x) et vers l'arrière dans le sens inverse de la direction de la longueur (x).

5. Installation de production d'une feuille (90') ou d'une plaque (90) selon l'une quelconque des revendications 3 à 4, **caractérisée en ce que** le dispositif de mesure (60, 64, 65, 66, 67, 70) n'est disposé que sur une seule position du dispositif de mesure par rapport à la direction de la longueur (x ; x') et est configuré pour mesurer la hauteur de matériau de départ (83 ; 87) précédente avant la découpe du matériau de départ ainsi que la hauteur de matériau de départ (87) suivante après la découpe du matériau de départ au niveau de cette unique position de dispositif de mesure, en particulier dans un plan de mesure défini par la direction de la largeur (y) et la direction de la hauteur (z).

6. Installation de production d'une feuille (90') ou d'une plaque (90) selon l'une quelconque des revendications 3 à 4, **caractérisée en ce que** le dispositif de mesure (64, 65, 66, 67, 71) est disposé, par rapport à la direction de la longueur (x ; x'), sur au moins une première position de dispositif de mesure et sur une deuxième position de dispositif de mesure, dans lequel, de préférence, le dispositif de mesure (64, 65, 66, 67, 71) est agencé pour mesurer la hauteur de matériau de départ (83 ; 87) précédente avant la découpe du matériau de départ sur la première position de dispositif de mesure et la hauteur de matériau de départ (87) suivante après la découpe du matériau de départ sur la deuxième position de dispositif de mesure, et dans lequel, en outre de préférence, le dispositif de mesure (64, 65, 66, 67, 71) est formé par un premier capteur de mesure disposé sur la première position de dispositif de mesure et par un deuxième capteur de mesure disposé sur la deuxième position de dispositif de mesure.

7. Installation de production d'une feuille (90') ou d'une plaque (90) selon l'une quelconque des revendications 3 à 6, **caractérisée en ce que** l'unité de coupe (50) est intégrée à un support d'unité de coupe (53), dans lequel le support d'unité de coupe (53) est relié à un support de machine (10) fixe stationnaire, de préférence en outre que le support d'unité de coupe (53) est conçu de manière à pouvoir pivoter en tournant d'un angle d'inclinaison (a), en particulier compris entre -5° et 30°, de préférence entre 0° et 7°, autour de la direction de la largeur (y) dans le sens inverse de la direction de la longueur (x ; x') et vers l'arrière.

8. Installation de production d'une feuille (90') ou d'une plaque (90) selon l'une quelconque des revendications 3 à 7, **caractérisée en ce qu'**un rouleau de pression (54) est prévu pour presser une surface du matériau de départ dans le sens inverse de la direction de la hauteur (z), dans lequel, vu dans la direction de la longueur (x; x'), ledit rouleau de pression (54) est disposé en amont de l'unité de coupe (50), de préférence en outre que le rouleau de pression (54) est intégré au support d'unité de coupe (53).

9. Installation de production d'une feuille (90') ou d'une plaque (90) selon la revendication 8, **caractérisée en ce que** le rouleau de pression (54) est conçu de manière à pouvoir être réglé dans la direction de la hauteur (z), de préférence séparément et indépendamment de l'unité de coupe (50), de préférence en outre que le rouleau de pression (54) est conçu de manière à pouvoir être réglé dans la direction de la longueur (x; x'), de préférence séparément et indépendamment de l'unité de coupe (50).

10. Installation de production d'une feuille (90') ou d'une plaque (90) selon l'une quelconque des revendications 3 à 7, **caractérisée en ce que** le dispositif de mesure (60, 64, 65, 66, 70) est conçu et agencé pour mesurer la hauteur de matériau de départ (83, 87) en amont de l'unité de coupe (50), vu dans la direction de la longueur (x; x').

11. Procédé destiné à faire fonctionner une installation selon l'une quelconque des revendications 3 à 10, dans lequel la feuille (90') ou la plaque (90) est découpée au moyen de l'unité de découpe (50) dans le bloc de mousse (80) prévu en tant que matériau de départ, et dans lequel, pour le contrôle de qualité de la feuille (90') ou de la plaque (90) découpée, un procédé de détection d'une épaisseur (d) d'une feuille (90') ou d'une plaque (90) selon l'une quelconque des revendications 1 à 2 est mis en oeuvre.

12. Procédé destiné à faire fonctionner une installation, selon la revendication 11, **caractérisé en ce que**, en fonction d'un résultat du procédé de détection de l'épaisseur (d) de la feuille (90') ou de la plaque (90) par rapport à une couche précédente, l'unité de coupe (50) est réglée par rapport à sa position en relation avec le matériau de départ, en particulier dans la direction de la hauteur (z), pour couper une couche suivante.

13. Procédé destiné à faire fonctionner une installation, selon l'une quelconque des revendications 11 à 12, **caractérisé en ce que** la longueur du matériau de départ dans la direction de la longueur (x; x') est détectée au moyen du dispositif de mesure (60, 64, 65, 66, 67, 70, 71).

14. Procédé destiné à faire fonctionner une installation, selon l'une quelconque des revendications 11 à 13, **caractérisé en ce qu'**une vitesse de transport du matériau de départ est adaptée en fonction d'une position du matériau de départ détectée par le dispositif de mesure (60, 64, 65, 66, 67, 70, 71).

15. Procédé destiné à faire fonctionner une installation, selon l'une quelconque des revendications 11 à 14, **caractérisé en ce que** la feuille (90') est évacuée, de préférence de manière continue, de l'installation après la découpe, ou que la plaque (90) est évacuée de l'installation après la découpe.
